(19) Europäisches Patentamt
European Patent Office
Office européen des brevets

(11) EP 4 756 669 A1

(12) EUROPEAN PATENT APPLICATION

(43) Date of publication:
10.06.2026 Bulletin 2026/24

(21) Application number: 24218365.5

(22) Date of filing: 09.12.2024

(51) International Patent Classification (IPC):
G06K 7/10 (2006.01)　　　G06K 19/06 (2006.01)

(52) Cooperative Patent Classification (CPC):
G06K 7/1095; G06K 19/06112

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: LiveDrop B.V.
5612 WB Eindhoven (NL)

(72) Inventors:
• LANGENDIJK, Erno Hermanus Antonius
5612 WB Eindhoven (NL)
• PALANGETIC, Marko
5612 WB Eindhoven (NL)
• CAARLS, Jurjen
5612 WB Eindhoven (NL)
• TSIMPOURIS, Evangelos
5612 WB Eindhoven (NL)

(74) Representative: DeltaPatents B.V.
Fellenoord 370
5611 ZL Eindhoven (NL)

(54) **METHOD AND DEVICE FOR UNIDIRECTIONAL TRANSFER OF DATA**

(57) Methods and devices are provided for unidirectional transfer of data from a sender device to a receiver device. At the sender device, respective parts of the data are encoded to generate respective 2D barcodes, and the 2D barcodes are sequentially displayed on a display. At the receiver device, an image sensor is used to capture the sequentially displayed 2D barcodes to obtain a received version of the transmitted data. Values of information density parameters, which determine a data transfer rate of the unidirectional transfer of the data to the receiver device, are selected based on an estimate of a capability of the receiver device to successfully capture and decode the 2D barcodes generated using the one or more selected parameters. The selected parameters are used to generate and display the 2D barcodes.

Fig. 1

**Description**

**TECHNICAL FIELD**

The invention relates to a computer-implemented method for unidirectional transfer of data from a sender device to a receiver device. The invention further relates to a sender device configured for unidirectional transfer of data to a receiver device. The invention further relates to a computer program comprising instructions arranged to cause a processor system to perform a respective computer-implemented method.

**BACKGROUND**

Methods for unidirectional transfer of data from a sender device to a receiver device exist as such. These methods are especially used in applications where it is important that the data connections are unidirectional, to minimize the risk that the sender device would receive undesired data, such as malware, back from the receiver device.

EP4300353 describes a computer-implemented method for unidirectional transfer of data from a sender device to a receiver device, wherein the sender device comprises or is connected to a display and the receiver device comprises or is connected to an image sensor. At the sender device, data to be transmitted to the receiver device is accessed; respective parts of the data are encoded to generate respective 2D barcodes; the 2D barcodes are sequentially displayed on the display, to enable the receiver device to capture said displayed 2D barcodes using the image sensor and to decode said captured 2D barcodes to obtain a received version of the transmitted data.

By displaying the data to be transmitted as a sequence of 2D barcodes, the amount of data which can be transferred is increased.

It is an object of the presently disclosed subject matter to further improve unidirectional transfer of data of the prior art to enable the transfer larger amounts of data in a reliable and time-efficient manner.

**SUMMARY**

In a first aspect of the presently disclosed subject matter, a computer-implemented method is provided for unidirectional transfer of data from a sender device to a receiver device, wherein the sender device comprises or is connected to a display and the receiver device comprises or is connected to an image sensor. The method comprises, at the sender device:

- accessing data to be transmitted to the receiver device;
- encoding respective parts of the data to generate respective 2D barcodes;
- sequentially displaying the 2D barcodes on the display, to enable the receiver device to capture said displayed 2D barcodes using the image sensor and to decode said captured 2D barcodes to obtain a received version of the transmitted data.

The method further comprises:

- selecting values of one or more information density parameters, wherein the one or more information density parameters determine a data transfer rate of the unidirectional transfer of the data to the receiver device, wherein the values of the one or more information density parameters are selected based on an estimate of a capability of the receiver device to successfully capture and decode the 2D barcodes generated using the one or more selected parameters; and

- using the selected parameters to generate and display the 2D barcodes.

In accordance with the first aspect of the presently disclosed subject matter, a computer program is provided, wherein the computer program comprises instructions arranged to cause a processor system to perform select steps of a computer-implemented method as described in this presently disclosed subject matter, wherein the select steps are steps to be performed at the sender device or at the receiver device or at both the sender device and the receiver device.

In accordance with the first aspect of the presently disclosed subject matter, a sender device is provided. The sender device is configured for unidirectional transfer of data to a receiver device, and comprises:

- a data storage interface to a data storage;
- a display output to a display;
- a processor subsystem configured to:

- via the data storage interface, access the data to be transmitted to the receiver device;
- encode respective parts of the data to generate respective 2D barcodes;
- via the display output, sequentially display the 2D barcodes on the display.

wherein the processor subsystem is further configured to:

- select values of one or more information density parameters, wherein the one or more information density parameters determine a data transfer rate of the unidirectional transfer of the data to the receiver device, wherein the values of the one or more information density parameters are selected based on an estimate of a capability of the receiver device to successfully capture and decode the 2D barcodes generated using the one or more selected parameters; and
- use the selected parameters to generate and display the 2D barcodes.

The above measures involve transferring data unidirectionally from a sender device to a receiver device with the help of one or more information density parameters, wherein the one or more information density parameters determine a data transfer rate of the unidirectional transfer of the data to the receiver device. The values of the one or more information density parameters are selected based on an estimate of a capability of the receiver device to successfully capture and decode the 2D barcodes generated using the one or more selected parameters. This way, the capabilities of the receiver device may be communicated while maintaining a unidirectional transfer of data from the sender device to the receiver device. This is relevant, as the capabilities, e.g., a type of image sensor, of the receiver device may not be known beforehand. This may be the case, for example, when there are multiple receiver devices with varying configurations. For example, if the receiver function is provided by an application installed on a mobile device, the wide variety of mobile devices, each with different camera specifications, may reflect a broad spectrum of receiver capabilities. Knowledge of the specific capabilities of the receiver device allows the sender device to select or adjust an appropriate data rate for the 2D barcodes, facilitating highspeed data transfer while remaining within the receiver device's capture and decoding capacity. Surpassing the receiver's capabilities may impede data reception or necessitate retransmissions, which would otherwise decrease the effective data rate. Conversely, setting a conservatively low data rate to ensure compatibility with all receiver devices would unnecessarily limit the data rate for more capable devices. The above measures enable the sender device to achieve a near-optimal data rate for its transmittal of data to the receiver device.

The following describes optional aspects of the method and sender device according to the first aspect of the presently disclosed subject matter.

Optionally, the one or more information density parameters may determine one or more of:

- a spatial resolution of a respective 2D barcode;
- a complexity or type of a respective 2D barcode, such as a QR code version;
- an error correction level for the encoding of the data;
- a number of distinct states per data element of a respective 2D barcode; and
- a duration of display of a respective 2D barcode.

Optionally, the method further comprises:

- obtaining the estimate of the capability of the receiver device to successfully capture and decode the 2D barcodes by obtaining receiver data from the receiver device;
- selecting the values of the one or more information density parameters based on the receiver data, for example by adjusting previous values of the one or more information density parameters.

Optionally, the method further comprises obtaining the receiver data from the receiver device using a unidirectional data transfer scheme, for example using:

- one or more 2D barcodes displayed by the receiver device on a display;
- a coded light transmission by the receiver device; or
- an audio transmission by the receiver device.

Optionally, the receiver data comprises configuration data indicative of a capture configuration of the receiver device, for example indicative of a spatial capture resolution, field of view, or temporal capture rate. The configuration data may be indicative of at least one of: a type of image sensor, a type of image signal processor, and a device type, of the receiver device. For example, a field of view of an image sensor may be presented, so that the sender device may determine a required element size on the display of the sender device. The sender device may determine a required element size depending on the display size of the sender device. Another example is that depending on a color quality of the image sensor, the sender device may be instructed to use color or not for the 2D barcode.

Optionally, the receiver data comprises feedback data indicative of a degree of success of the receiver device in capturing and decoding 2D barcodes generated and displayed by the sender device. Optionally, the feedback data relates to a previous sequence of 2D barcodes generated to transmit the data. The previous sequence of 2D barcodes may be generated using previous values of the one or more information density parameters. The method may further comprise adjusting the previous values of the one or more information density parameters based on the feedback data. For example, the receiver device may give feedback on what frames the receiver device still may need to receive, before a full transfer may be finished. This may make the full transfer in total quicker, as the receiver may not have to wait until a missed 2D bar code is presented again.

Optionally, the method further comprises generating, at the sender device, a sweep pattern comprising a series of 2D barcodes encoded at different information densities, wherein the receiver data is indicative of which 2D barcodes, at their respective information densities, were successfully captured and decoded by the receiver device. The sender device may perform a sweep through a series of 2D barcodes where subsequent frames may comprise higher and higher amounts of data, for example, using smaller block sizes or higher refresh rates. The receiver device may be able to receive the series of 2D barcodes. The receiver device may note which 2D barcodes out of the series of 2D barcodes the receiver device may be able to still decode. Based on the receiving and/or noting, the receiver device may be able to communicate to the sender device what the optimal setting may be for the 2D bar codes.

In a further aspect of the presently disclosed subject matter, selecting the one or more information density parameters comprises receiving a user selection of values of the one or more information density parameters, for example from a user interface element which allows a user to adjust the values of the one or more information density parameters. This way, a data transfer rate may be adapted to optimize the transfer between a sender device and a receiver device, without the need for the receiver device having to communicate its capabilities to the sender device. Having the receiver device communicate to the sender device what the receiver device may be capable of may not be a possible or desired feature, e.g., since it generally requires an additional user action and/or the sender device may not have a means to receive data from the receiver device.

For example, a user-interface element such as a slider bar may be used in order to adjust transfer speed from, e.g., low to high and vice versa. It may be desirable to be able to manually adjust the transfer speed to a lower or higher rate. For that purpose, the slider bar or another user-interface element may be presented on a graphical user interface. For example, the transfer speed may be made adaptable. An element such as the slider bar may adjust one or more of the number of data elements in the 2D bar code. An element such as the slider bar may adjust the barcode version of the barcode. An element such as the slider bar may also adjust one or more other parameters which may impact the transfer speed, such as a refresh rate of consecutive frames, a use of color codes instead of black-and-white color codes, and an amount of grey scales. For example, one or more parameters may be mapped to one dimension, and/or controlled by a single slider bar. For example, each of the one or more parameters may be adjusted separately, e.g., via multiple slider bars.

In a third aspect of the presently disclosed subject matter, a computer-implemented method is provided for unidirectional transfer of data from a sender device to a receiver device, wherein the sender device comprises or is connected to a display and the receiver device comprises or is connected to an image sensor. The method comprises, at the sender device:

- accessing data to be transmitted to the receiver device;
- encoding respective parts of the data to generate respective 2D barcodes;
- sequentially displaying the 2D barcodes on the display, to enable the receiver device to capture said displayed 2D barcodes using the image sensor and to decode said captured 2D barcodes to obtain a received version of the transmitted data.

The method further comprises generating and displaying a focus pattern to assist the receiver device in auto-focusing on the display of the sender device, wherein the focus pattern is generated to comprise a lower amount of spatial higher-frequency components compared to a respective 2D barcode.

In accordance with the third aspect of the presently disclosed subject matter, a computer program is provided, wherein the computer program comprises instructions arranged to cause a processor system to perform select steps of a computer-implemented method as described in this presently disclosed subject matter, wherein the select steps are steps to be performed at the sender device or at the receiver device or at both the sender device and the receiver device.

In accordance with the third aspect of the presently disclosed subject matter, a sender device is provided. The sender device is configured for unidirectional transfer of data to a receiver device, and comprises:

- a data storage interface to a data storage;
- a display output to a display;

- a processor subsystem configured to:

  - via the data storage interface, access the data to be transmitted to the receiver device;
  - encode respective parts of the data to generate respective 2D barcodes;
  - via the display output, sequentially display the 2D barcodes on the display.

wherein the processor subsystem is further configured to:

- generate and display a focus pattern to assist the receiver device in auto-focusing on the display of the sender device, wherein the focus pattern is generated to comprise a lower amount of spatial higher-frequency components compared to a respective 2D barcode.

The above measures may enhance an autofocus speed of cameras, with which cameras achieve focus on 2D barcode videos. The receiver device needs to focus the camera of the receiver device on the display of the sender device. To this purpose, typically autofocus technology, which is known per se, is used. However, autofocus technology functions suboptimally for high-resolution barcodes, due to the high spatial frequencies. In the above measures, a specific lower frequency pattern is provided to enable the autofocus of the receiver device to achieve and maintain focus on the display of the sender device. The focus pattern may mitigate the autofocus issue and assist the receiver device in auto-focusing on the display of the sender device, as the focus pattern comprises a lower amount of spatial higher-frequency components compared to a respective 2D barcode. In the lower frequency pattern, the lower amount of spatial frequencies may not comprise lower frequencies per se, but generally comprises a lower energy in the higher-frequency part of the spectrum, e.g., a lower energy on average. This way, a high contrast, low spatial frequency pattern is introduced, which may help the camera in quickly and reliably achieving focus before recording the 2D barcode video.

The following describes optional aspects of the method and sender device according to the third aspect of the presently disclosed subject matter.

Optionally, the method further comprises displaying the focus pattern time-alternatingly or simultaneously with the 2D barcodes. A camera may lose focus over time, particularly with moving or changing video content. Displaying the autofocus pattern intermittently and/or periodically may allow the camera to re-establish focus if it has drifted out of focus during the data transfer. The autofocus pattern may be displayed time-alternatingly with the 2D barcodes, for example at regular intervals, such as two seconds every ten seconds. The low spatial frequency of the focus pattern may ensure that the focus pattern may be easily detected and processed by regular autofocus systems, which require sufficient contrast to function effectively. Preferably, the method comprises displaying the focus pattern as an insert within a spatial perimeter of a respective 2D barcode. More preferably, the method comprises displaying the focus pattern centrally within the spatial perimeter.

In a fourth aspect of the presently disclosed subject matter, a computer-implemented method is provided for unidirectional transfer of data from a sender device to a receiver device, wherein the sender device comprises or is connected to a display and the receiver device comprises or is connected to an image sensor. The method comprises, at the sender device:

- accessing data to be transmitted to the receiver device;
- encoding respective parts of the data to generate respective 2D barcodes;
- sequentially displaying the 2D barcodes on the display, to enable the receiver device to capture said displayed 2D barcodes using the image sensor and to decode said captured 2D barcodes to obtain a received version of the transmitted data.

The method further comprises selecting an aspect ratio of the 2D barcodes based on an aspect ratio of the image sensor of the receiver device or an aspect ratio of captured images by the receiver device.

In accordance with the fourth aspect of the presently disclosed subject matter, a computer program is provided, wherein the computer program comprises instructions arranged to cause a processor system to perform select steps of a computer-implemented method as described in this presently disclosed subject matter, wherein the select steps are steps to be performed at the sender device or at the receiver device or at both the sender device and the receiver device.

In accordance with the fourth aspect of the presently disclosed subject matter, a sender device is provided. The sender device is configured for unidirectional transfer of data to a receiver device, and comprises:

- a data storage interface to a data storage;
- a display output to a display;
- a processor subsystem configured to:

- via the data storage interface, access the data to be transmitted to the receiver device;
- encode respective parts of the data to generate respective 2D barcodes;
- via the display output, sequentially display the 2D barcodes on the display.

wherein the processor subsystem is further configured to:

- select an aspect ratio of the 2D barcodes based on an aspect ratio of the image sensor of the receiver device or an aspect ratio of captured images by the receiver device.

The above measures involve selecting an aspect ratio of the 2D barcodes based on an aspect ratio of the image sensor of the receiver device or an aspect ratio of captured images by the receiver device. A camera view does generally not comprise the same aspect ratio as a 2D barcode. Using known methods which do not involve the above measures, situations occur wherein certain areas of the camera view are not covered by the 2D barcode. By selecting an aspect ratio of the 2D barcodes based on an aspect ratio of the image sensor of the receiver device or an aspect ratio of captured images by the receiver device, the available area of the camera view may be optimized, by covering as much of the available as possible with the visual code. Optimally covering the available camera view area may enable to include as much data as possible into a single, spatial 2D barcode, and therefore improve a total speed of data transfers.

The following describes optional aspects of the method and sender device according to the fourth aspect of the presently disclosed subject matter.

Optionally, the method further comprises obtaining receiver data from the receiver device which is indicative of the aspect ratio of the image sensor of the receiver device or the aspect ratio of the captured images by the receiver device. Optionally, the receiver data may comprise configuration data indicative of a capture configuration of the receiver device, for example indicative of a spatial capture resolution or field of view. Optionally, the configuration data may be indicative of a type of image sensor or a device type of the receiver device.

Optionally, a respective 2D barcode for a square aspect ratio may comprise finder patterns arranged at corners of the 2D barcode and an equal number of data elements in a horizontal and vertical direction of the 2D barcode, and the method further comprises generating a respective 2D barcode for a non-square aspect ratio by at least one of increasing the number of data elements between finder patterns in one direction, and adding data elements outside of a square bounding box defined by the finder patterns. This way, it may not be necessary to provide an aspect ratio in advance to the receiver, as providing an aspect ratio in advance to the receiver may not be needed to determine the position of the finder patterns and the code itself. Since the aspect ratio may not be provided here as a prior knowledge, the aspect ratio may be placed inside the code, e.g., as a part of the version information. This may, for example, be incorporated in the design of the reserved areas around the markers.

Optionally, the number of data elements in the horizontal and vertical direction of the 2D barcode are selected to each meet a modulo condition, for example requiring that the number of data elements modulo 4 equals 1. This way, a natural generalization of the 2D barcode into a rectangular shape may be provided, as in regular, square 2D barcodes, the number of data elements the 2D barcode may comprise in one size may be calculated by the formula, $4 \times version + 17$, meaning that the size may be any number which gives a remainder 1 when divided by 4. Keeping the modulo condition may help to properly implement timing and alignment patterns.

In a fifth aspect of the presently disclosed subject matter, a computer-implemented method is provided for unidirectional transfer of data from a sender device to a receiver device, wherein the sender device comprises or is connected to a display and the receiver device comprises or is connected to an image sensor. The method comprises, at the sender device:

- accessing data to be transmitted to the receiver device;
- encoding respective parts of the data to generate respective 2D barcodes;
- sequentially displaying the 2D barcodes on the display, to enable the receiver device to capture said displayed 2D barcodes using the image sensor and to decode said captured 2D barcodes to obtain a received version of the transmitted data.
- The method further comprises
- receiving from the receiver device information on a radial distortion on the receiver device,
- generating one or more spatial markers on the 2D barcodes, wherein the one or more spatial markers are used to enable the receiver device to correct a radial distortion on the receiver device, the generating comprising:

  - determining a level of the radial distortion;
  - determining a number of spatial markers based on the level of the radial distortion;
  - determining spatial coordinates of the spatial markers on the 2D barcodes;

- determining error correction levels corresponding to the radial distortion;
- for each of the error correction levels, determining error correction parameters, the error correction parameters defining error correction blocks characterizing the 2D barcodes;
- based on the determining of the error correction parameters, configuring the corresponding error correction blocks.

In accordance with the fifth aspect of the presently disclosed subject matter, a computer program is provided, wherein the computer program comprises instructions arranged to cause a processor system to perform select steps of a computer-implemented method as described in this presently disclosed subject matter, wherein the select steps are steps to be performed at the sender device or at the receiver device or at both the sender device and the receiver device.

In accordance with the fifth aspect of the presently disclosed subject matter, a sender device is provided. The sender device is configured for unidirectional transfer of data to a receiver device, and comprises:

- a data storage interface to a data storage;
- a display output to a display;
- a processor subsystem configured to:

  - via the data storage interface, access the data to be transmitted to the receiver device;
  - encode respective parts of the data to generate respective 2D barcodes;
  - via the display output, sequentially display the 2D barcodes on the display.

wherein the processor subsystem is further configured to:

- receive from the receiver device information on a radial distortion on the receiver device,
- generate one or more spatial markers on the 2D barcodes, wherein the one or more spatial markers are used to enable the receiver device to correct a radial distortion on the receiver device, the generating comprising:

  - determining a level of the radial distortion;
  - determining a number of spatial markers based on the level of the radial distortion;
  - determining spatial coordinates of the spatial markers on the 2D barcodes;

- determine error correction levels corresponding to the radial distortion;
- for each of the error correction levels, determine error correction parameters, the error correction parameters defining error correction blocks characterizing the 2D barcodes;
- based on the determining of the error correction parameters, configure the corresponding error correction blocks.

The above measures involve generating a high-density dynamic 2D barcode which is capable to comprise significantly more data than general 2D barcodes. As known methods for creating 2D barcodes only may be capable of creating 2D barcodes which are bounded in size, while modern cameras, e.g., the modern cameras on smartphones, are generally capable to capture way more information than, e.g., 177 data elements in width, which is comparable to a high-level, e.g., 40, QR code, there is generally a lot of unused space on high-resolution images. This unused space may create a demand for having high-density dynamic 2D barcodes which may contain much more data, as this may allow them to transmit larger files and/or in a shorter amount of time.

The following describes optional aspects of the method and sender device according to the fifth aspect of the presently disclosed subject matter.

Optionally, the error correction blocks may comprise information on data and parity, and the method further comprises

- for each of the error correction blocks, retrieving the information on data and parity;
- if the 2D barcodes are damaged, using the information on data and parity to retrieve original information on the 2D barcodes.

Optionally, the error correction blocks may comprise Reed-Solomon error correction blocks. The Reed-Solomon error correction blocks may comprise information on data and/or parity. The information on data and/or parity may be used to retrieve original information on the 2D barcodes, for example, if the 2D barcodes code may be damaged.

In a sixth aspect of the presently disclosed subject matter, a computer-implemented method is provided for unidirectional transfer of data from a sender device to a receiver device, wherein the sender device comprises or is connected to a display and the receiver device comprises or is connected to an image sensor. The method comprises, at the sender device:

- accessing data to be transmitted to the receiver device;
- encoding respective parts of the data to generate respective 2D barcodes, wherein the 2D barcodes comprise data elements, wherein a data element has a data element size;
- sequentially displaying the 2D barcodes on the display, to enable the receiver device to capture said displayed 2D barcodes using the image sensor and to decode said captured 2D barcodes to obtain a received version of the transmitted data.

The method further comprises

- displaying spatial markers in spatial relation to the barcode data of respective 2D barcodes to facilitate detection of the 2D barcodes on the display, the spatial markers determining locations of the 2D barcodes on the display,
- based on the spatial relation of the spatial markers to the barcode data, adjusting a size of the spatial markers to an integer multiple of the data element size.

In accordance with the sixth aspect of the presently disclosed subject matter, a computer program is provided, wherein the computer program comprises instructions arranged to cause a processor system to perform select steps of a computer-implemented method as described in this presently disclosed subject matter, wherein the select steps are steps to be performed at the sender device or at the receiver device or at both the sender device and the receiver device.

In accordance with the sixth aspect of the presently disclosed subject matter, a sender device is provided. The sender device is configured for unidirectional transfer of data to a receiver device, and comprises:

- a data storage interface to a data storage;
- a display output to a display;
- a processor subsystem configured to:

    - via the data storage interface, access the data to be transmitted to the receiver device;
    - encode respective parts of the data to generate respective 2D barcodes, wherein the 2D barcodes comprise data elements, wherein a data element has a data element size;
    - via the display output, sequentially display the 2D barcodes on the display.

wherein the processor subsystem is further configured to:

- display spatial markers in spatial relation to the barcode data of respective 2D barcodes to facilitate detection of the 2D barcodes on the display, the spatial markers determining locations of the 2D barcodes on the display,
- based on the spatial relation of the spatial markers to the barcode data, adjusting a size of the spatial markers to an integer multiple of the data element size.

The above measures involve that, based on a spatial relation of spatial markers, such as finder patterns, to the barcode data, a size of the spatial markers is adjusted to an integer multiple of the data element size of the 2D barcodes. In known 2D barcodes, the spatial markers generally scale with the data element size. Because of the scaling, the spatial markers may become relatively small for high-density dynamic 2D barcodes. The spatial markers may become less distinguishable and less detectable, by which the locations of the 2D barcodes on a display and of data elements comprising a message in the 2D barcode are harder to determine. By the above measures, spatial markers may be adjusted in size based on the functional information of the 2D barcode. For example, the size of the spatial markers may be adjusted based on the data element size of the 2D barcode.

The following describes optional aspects of the method and sender device according to the sixth aspect of the presently disclosed subject matter.

Optionally, the 2D barcodes comprise QR codes, the QR codes being of a QR code version $v$. and the method comprises

- adjusting the size of the spatial markers by multiplying the data element size with a scaling factor, wherein the scaling factor is determined as $(v - 1)//40 + 1$, where $//$ stands for integer division.

Optionally, the method further comprises

- determining spatial coordinates of functional information on the 2D barcodes; and
- based on the spatial coordinates of the functional information on the 2D barcodes, generating the 2D barcodes such that the spatial markers are spatially aligned in relation to the functional information on the 2D barcodes.

For example, the spatial markers may be spatially aligned in relation to the functional information such that there may be no overlap of the spatial markers with the functional information of the 2D barcode. Optionally, the spatial coordinates of the functional information may be adapted, maintaining the relative position of the functional information with respect to the spatial markers.

Optionally, the functional information may comprise one or more of format information, version information, a timing pattern, and spatial markers of the 2D barcodes.

**BRIEF DESCRIPTION OF THE DRAWINGS**

These and other aspects of the invention will be apparent from and elucidated further with reference to the embodiments described by way of example in the following description and with reference to the accompanying drawings, in which

Fig. 1 shows a sender device configured for unidirectional transfer of data to a receiver device, wherein the unidirectional transfer comprises the sender device encoding data to be transmitted as respective 2D barcodes and sequentially displaying the 2D barcodes on a display, and the receiver device capturing images of the 2D barcodes and decoding the 2D barcodes so as to obtain a received version of the transmitted data;

Fig. 2 shows embodiments of 2D barcode frames with cameras of different qualities;

Fig. 3 shows embodiments of focus patterns, comprising high-contrast, low-spatial frequency patterns compared to a regular 2D barcode;

Fig. 4 shows an embodiment of rectangular 2D barcode;

Fig. 5 shows an embodiment of a high-density 2D barcode;

Fig. 6 shows embodiments of 2D barcode frames, embodiments of spatial markers;

Figs. 7a-7b show embodiments of designs of alignment patterns and finder patterns on 2D barcode frames;

Fig. 7c shows a data placement flow on a 2D barcode;

Fig. 8 shows a computer-readable medium comprising data.

It should be noted that the figures are purely diagrammatic and not drawn to scale. In the figures, elements which correspond to elements already described may have the same reference numerals.

**List of reference numbers and abbreviations**

The following list of reference numbers is provided for facilitating the interpretation of the drawings and shall not be construed as limiting the claims.

| | |
|---|---|
| 10, 20 | dynamic 2D barcode frames |
| 30 | dynamic 2D barcode frame |
| 40 | dynamic 2D barcode frame |
| 41 | rectangular dynamic 2D barcode frame |
| 50 | dynamic 2D barcode frame with a focus pattern |
| 60 | square spatial pattern for use in a focus pattern |
| 70 | circular spatial pattern for use in a focus pattern |
| 80 | circular spatial pattern for use in a focus pattern |
| 90 | high-density dynamic 2D barcode frame |
| 51, 51' | dynamic 2D barcode frame |
| 52 | spatial marker |
| 52a-52c | finder patterns |
| 52a'-52c' | finder patterns |
| A, B, C | spatial marker sizes |
| 53 | alignment pattern |
| 100 | sender device |
| 120 | data storage interface |
| 122 | data storage |
| 140 | display output |
| 142 | display |
| 160 | processor subsystem |

| 200 | receiver device |
|---|---|
| 220 | sensor interface |
| 222 | image sensor |
| 260 | processor subsystem |

| 701, 702 | designs of alignment pattern and finder pattern on a 2D barcode frame |
|---|---|
| 703 | direction of data placement |

| 800 | computer-readable medium |
|---|---|
| 810 | stored data |

## DETAILED DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

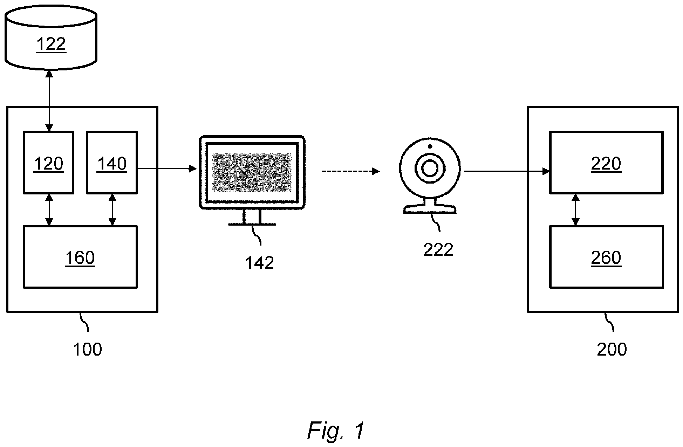

**Fig. 1** illustrates the unidirectional transfer of data from a sender device 100 to a receiver device 200. The sender device 100, which is configured for said unidirectional transfer of data to the receiver device 200, may comprise a data storage interface 120 to a data storage 122, a display output 140 to a display 142 and a processor subsystem 160 which may be configured to, during operation of the sender device 100, via the data storage interface 120, access the data to be transmitted to the receiver device, encode respective parts of the data to generate respective 2D barcodes, and via the display output 140, sequentially display the 2D barcodes on the display 142. The receiver device 200, which may be configured to receive data from the sender device 100, may comprise a sensor interface 220 to an image sensor 222 and a processor subsystem 260 which may be configured to, using the image sensor 222, capture the 2D barcodes which are sequentially displayed on the display 142 to obtain a series of captured images, and in each or a subset of the series of captured images, detect a position of a respective 2D barcode in the captured image, scan the 2D barcode at the identified position to obtain barcode data, and decode the barcode data to, together with the barcode data obtained from other captured images, obtain a received version of the transmitted data.

Briefly speaking, an exemplary operation of the sender device and the receiver device may be the following. Here and elsewhere, the sequence of 2D barcodes may also be referred to as a 'video barcode'. On the sender device, a user may select a file containing data to be transmitted, or such data may be selected automatically. The sender device may then generate a video barcode and display the video barcode on its display. The receiver device may comprise a camera which is able to capture the video barcode. From the captured video data, the data which was transmitted by the sender device may be decoded. The thus-obtained data is elsewhere also referred to as a 'received version' of the data and may be a bit true copy of the data at the sender device but may also be an approximation thereof, e.g., if errors occurred during transmission. It is noted that the occurrence of such errors may be acceptable in some applications, e.g., image or video transfer, while in others, the occurrence of errors may be avoided or reduced by encoding the data using an error correction scheme. It is further noted that in cases where a file is selected at the sender device, either the entire file may be transmitted (e.g., with headers, metadata, etc.) or only the contents of the file, in which case the receiver device may in some embodiments reconstruct the file locally or generate another file to store the contents.

With continued reference to Fig. 1., it is noted that the data storage 122 may take various forms, such as a memory, a solid-state drive or an array of solid-state drives, a hard drive, or an array of hard drives, etc. The data storage interface 120 may be a type of interface which corresponds to the type of data storage, e.g., a memory interface, a solid-state drive interface, etc. By way of example, Fig. 1 shows the data storage 122 to be an external data storage, but the data storage 122 may also be an internal component of the sender device 100. Similarly, by way of example, Fig. 1 shows the display 142 to be an external display, but the display 142 may also be an internal component of the sender device 100. The display interface 140 may likewise take any suitable form, such as an internal display interface, e.g., based on MPI DSI or MDDI, or an external display interface, e.g., based on HDMI or USB-C, etc. With reference to the receiver device 200, it is noted that the image sensor 222 may be part of a camera, which may be an external camera (e.g., a webcam) or an internal camera of the receiver device 200. The sensor interface 220 may take any suitable form to receive captured image data from the image sensor 222. With reference to the processor subsystems 160, 260 of the sender device 100 and receiver device 200, each of these may be embodied by a single CPU, such as a x86 or ARM-based CPU, but also by a combination of such CPUs and/or other types of processing units, such as GPUs.

Although not shown in Fig. 1, the sender device 100 and the receiver device 200 may each also comprise additional components. For example, the receiver device 200 may, like the sender device 100, also comprise a data storage interface to a data storage, while both the sender device 100 and the receiver device 200 may comprise a user input interface to a user input device, such as a touch screen, a keyboard, a mouse, etc., to enable a user to interact with a respective device.

In some embodiments, the functions described with reference to the processor subsystem of either the sender device 100 or the receiver device 200 may be implemented by software, for example as an application such as a mobile app. For example, the sender device 100 may be a computer or mobile device which is configured to execute a sender app, which app allows selecting a file for transfer and which then displays a video barcode, while the receiver device 200 may be a computer or mobile device which is configured to execute a receiver app, which app allows capturing the video barcode with the device's camera and which then provides access to the transmitted data. In some embodiments, both the sender device 100 and the receiver device 200 may be a same type of device, e.g., a computer, mobile phone, tablet device, smart watch, etc. In other embodiments, the sender device 100 may be a different type of device than the receiver device 200. For example, the sender device 100 may be a mobile device with integrated display, while the receiver device 100 may be smart glasses with integrated camera.

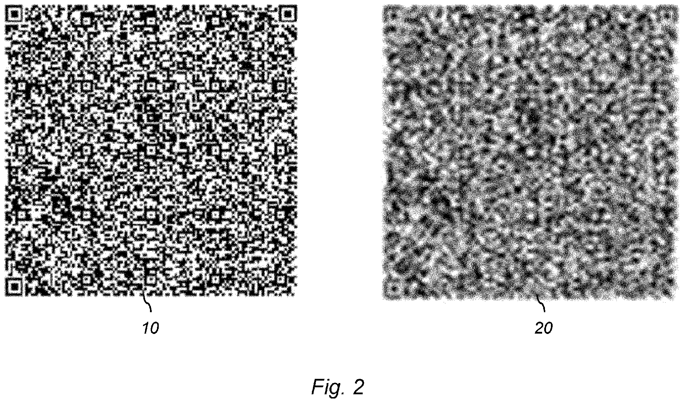

Fig. 2 illustrates 2D barcode frames 10, 20. 2D barcode frames 10, 20 may be captured with different image sensors 222. Different image sensors 222 may be different, e.g., different in aspects such as resolution, dynamic range, aspect ratio, etc. For example, different image sensors may be comprised in cameras which differ in quality. For example, 2D barcode frame 10 may be captured with a high-resolution image sensor 222. 2D barcode frame 20 may be captured with a low-resolution image sensor, and/or an image which may be otherwise worse in quality than the image sensor 222 with which 2D barcode frame may be captured. For example, a blur on a poor camera may be so large that the data blocks on the resulting image in 2D barcode frame 20 may merge, and may not be read out correctly anymore.

For a high data transfer rate from a sender device 100 to a receiver device 200, the sender device 100 may need to have a high refresh rate. The module size, or size of the data blocks, may need to be small as well in order to reach this objective. However, when receiving device 100 comprises a poor camera, the frames may become blurry, and the blocks may not be captured accurately. Similarly, the receiving device 200 may comprise a reasonably good camera 222; but if sender device 100 may be set to a low data transfer, which, e.g., may be due to compatibility reasons. With a low refresh rate and large modules, the transfer rate may still be much lower than it could be.

In the following, the various steps and options represent method steps of a computer-implemented method as described in this specification.

In an embodiment, values of one or more information density parameters may be selected. The one or more information density parameters may determine a data transfer rate of the unidirectional transfer of the data to the receiver device 200, wherein the values of the one or more information density parameters may be selected based on an estimate of a capability of receiver device 200 to successfully capture and decode the 2D barcodes generated using the one or more selected parameters. The selected parameters may be used to generate and display the 2D barcodes.

This way, data indicating the data transfer capabilities of receiver device 200 may be communicated to sender device 100, while maintaining a unidirectional transfer of data from sender device 100 to receiver device 200. Receiver device 200 communicates its capabilities, such that sender device 100 may adjust data transfer settings of sender device 100 for an optimal transfer speed between sender device 100 and receiver device 200. For example, if receiver device 200 is provided with a poor camera 222 with a low resolution, e.g., 1 Mpixel, with a refresh rate of 20 Hz, the estimate of the capability of receiver device 200 may comprise that receiver device 200 may only receive 2D bar code sequences, e.g., at version 20 at 10 Hz. On the other hand, if, for example, receiver device 200 comprises a high-quality camera 222 with, e.g., a 4K resolution and a 60 Hz refresh rate, the estimate of the capability of receiver device 200 may comprise that receiver device 200 may receive 2D barcode sequences, e.g., at version 40 at 30 Hz.

The means to communicate to sender device 100 the capability of receiver device 200 may comprise using a 2D barcode out of the 2D barcode sequence with a low transfer speed. By using a low transfer speed, receiver device 200 may be certainly capable of receiving the data. Sender device 100 may be provided with an image sensor, e.g., comprised in a camera, in order to capture the 2D barcode sequence in order to receive necessary data in order to adapt data transfer settings. Sender device 100 may have a camera which may observe a display of receiver device 200.

In some examples, receiver device 200 may have a camera 222 and a display on a same side. The 2D barcode may be displayed throughout the data transfer. Optionally, receiver device 200 may direct a display to sender device 100 first, and later direct the camera 222 to sender device 100.

In some examples, a 2D barcode 10, 20 may be displayed with, e.g., two parameters encoded. The parameters may be encoded as one or more data elements in the 2D barcode. The encoding may enable receiver device 200 to decode the parameters. The parameters may comprise a maximum 2D barcode update rate, and/or a minimum size of data elements in 2D barcode video frames. A value of the maximum 2D barcode update rate may depend on an amount of frames per second of a camera in receiver device 200. A value of the minimum size of data elements in 2D barcode video frames may depend on an expected size of data elements on the camera image and the camera resolution.

In an embodiment, the receiver device 200 may give feedback using another method than an basic 2D barcode: instead of a basic 2D barcode, one or more of a barcode, a coded light transmission such as Li-Fi, a bar of which a size may signal a value, an audio transmission such as an audio signal, and any other means of transferring required information to the sender device may be used.

In some examples, a field of view of the camera 222 is presented, so that sender device 100 may determine, e.g., depending on the display size of sender device 100, a required element size on the display 142 of sender device 100. Depending on a color quality of the camera 222, sender device 100 may be instructed to use color or not for the 2D barcode.

In some examples, receiver device 200 may give feedback on a quality of receiving, e.g., when receiver device 200 and sender device 100 may observe each other's 2D barcode simultaneously. When lots of detection errors are present, receiver device 200 may ask sender device 100 to change one or more of, e.g., a module size and a frequence.

In some examples, receiver device 200 may give feedback on what frames it still may need to receive, before a full transfer may be finished. This may make the full transfer in total quicker, as the receiver may not have to wait until a missed 2D bar code is presented again.

In some examples, receiver device 200 may give feedback using another method than a simply recognized 2D barcode. Instead of a simply recognized 2D barcode, one or more of a barcode, a color-coding, a bar of which a size may signal a value, an audio signal, and any other means of transferring required information to sender device 100.

In some examples, sender device 100 does some kind of sweep through a series of 2D bar codes where subsequent frames have higher and higher amounts of data (using smaller block sizes or higher refresh rates for example). Then the receiver may try to receive them and note which ones it may be able to still decode and from that tells the sender what the optimal setting is for the 2D bar codes.

In some examples, receiver device 200 may comprise a display next to a camera 222. This may be the case in, e.g., a mobile phone comprising a front-facing camera. This may allow receiver device 200 to give real-time feedback if the transferred data is received correctly. If the transferred data is not received correctly, receiver device 200 may ask sender device 100 to slow down, e.g., decrease a data transfer rate, and/or to make a block size larger. If receiver device 200 may receive close to 100% of the frames, receiver device 200 may ask to increase a data transfer rate. It may also be the case that the transfer may be disturbed by reflections and/or other non-constant aspects, in which cases receiver device 200 may also ask sender device 100 to decrease a data transfer rate by making the blocks larger, and/or the transfer speed slower.

In some examples, receiver device 200 may share information back via, e.g., a coded light. For example, a flash light of, e.g., a mobile phone may be used for that. Also, other means to provide feedback may be used, such as using a radio signal, e.g., Bluetooth or Wi-Fi.

In an embodiment, the method may be implemented, e.g., in a computer application comprising a sender app and a receiver app. In the sender app, which may be run on, e.g., a computer and/or a mobile phone with a display, a file may be selected for transfer. In the receiver app, which may be run on, e.g., a computer and/or a mobile phone with a camera, a transmitted video signal may be recorded and decoded to the file.

In an example implementation, sender device 100 may be a computer comprising a screen, and/or receiver device 200 may be another computer comprising a camera. In another example implementation, sender device 100 as well as receiver device 200 may be mobile phones. Any other combination of computers and mobile phones may be an option as well.

In an example implementation, the method may be used for ticketing to access an event. In another implementation, the method may be used to extract files from a secure IT or OT domain, e.g., IT in Operation Technology. This way, a risk may be avoided to infect the secure domain with a virus or other malware. Beyond these example implementations, the method may hold potential for a wide range of various implementations. For instance, the method may be utilized in industrial settings for transferring operational data securely and efficiently between machinery and control systems. In healthcare, the method may facilitate rapid and accurate transmission of medical data between devices for real-time diagnostics. Additionally, in the realm of augmented reality (AR), the method may enhance the efficiency of data exchange between AR glasses and external displays, improving user experience. The method may be suitable for diverse fields requiring reliable and fast data transfer under varying conditions. The method may also be used in environments where the sender is observing only trusted devices, e.g., where eavesdropping may still not be possible. These environments may comprise transfers between individuals that trust each other, and/or transferring data between devices from a single individual.

In the following, with continued reference to aforementioned Figures, the various steps and options represent method steps of a computer-implemented method as described in this specification.

In an embodiment, selecting the one or more information density parameters may comprise receiving a user selection of values of the one or more information density parameters, for example from a user interface element which allows a user to adjust the values of the one or more information density parameters.

For example, sender device 100 may adjust a transfer speed manually, via, e.g., a slider bar, as, for example, an element on a user-interface. Sender device 100 and receiver device 200 may be in close proximity. Users may also see and interact with each other. A user then may note on the receiver side that the transfer is slow or not working, as the sender transfer speed may be too high. In that case, a sender may lower its transfer speed by setting the transfer speed slider bar to, e.g., "low". Vice versa, if the transfer speed may be low and the receiver may indicate that the transfer speed may be higher, the sender may adjust the transfer speed to a higher rate.

In some examples, the transfer speed may be made adaptable. A slider bar may adjust the number of data blocks in the 2D bar code 10, 20. For example, the slider may adjust the barcode version of the barcode 10, 20 from 1 to 40, e.g., via adjusting the number of blocks from 21 × 21 to 177 × 177.

In some examples, other parameters that may impact the transfer speed may be adjusted. For example, a refresh rate of consecutive frames, a use of color codes instead of black-and-white color codes, and/or an amount of grey scales.

In some examples, one or more parameters may be mapped to one dimension, and/or controlled by a single slider bar. Optionally, each of the one or more parameters may be adjusted separately, e.g., via multiple slider bars.

In prior art, receiver devices generally use a camera to record a 2D barcode video. In order to obtain a recording of images which are sharp enough, the camera must first achieve focus. This process of achieving focus is generally called autofocus, and involves detecting the focal distance to produce a clear image. There exist several autofocusing methods in prior art, by which cameras achieve focus.

For several types of cameras, e.g., cameras in mobile phones and cameras in many types of webcams, the time which may be needed to achieve focus when aimed at a 2D barcode video may range from, e.g., 10 to 30 seconds. This timescale is generally an order of ten times longer than the actual data transfer time, which typically ranges in between, e.g., a few seconds. In contrast, when recording other types of content, such as still images or videos on a screen, the autofocusing process may be generally faster. Therefore, the discrepancy in the autofocusing speed may be specifically related to the 2D barcode video datatypes.

Autofocus systems may rely on a high spatial contrast at medium to low spatial frequencies in order to function efficiently. In formula form, with $I_{max}$ and $I_{min}$ denoting a maximal, resp. a minimal luminance, the spatial contrast $C$ may be given by

$$C = \frac{I_{max} - I_{min}}{I_{max} + I_{min}}.$$

While each video frame of the 2D barcode may offer a high contrast, since the blocks generally are either black or white, the blocks may be relatively small, especially for higher versions of the barcodes, e.g., level 30 and above. Moreover, these blocks may vary over time due to the encoding of different data per frame, and/or motion caused by hand movement. This may result in a random and high-contrast gradient, where the gradient of spatial contrast may be given by

$$\nabla C = (\frac{\partial C}{\partial x}, \frac{\partial C}{\partial y})$$

The spatial contrast, when averaged over multiple frames, may become low. The autofocus system, therefore, may struggle to lock onto a stable focus point.

In the following, the various steps and options represent method steps of a computer-implemented method as described in this specification.

In an embodiment, a method may enhance the autofocusing speed of cameras with which cameras achieve focus on 2D barcode videos in generating and displaying a focus pattern, which may be generated to comprise a lower amount of spatial higher-frequency components compared to a respective 2D barcode. The focus pattern may mitigate assist a receiver device 200 in auto-focusing on the display 142 of the sender device 100, as the focus pattern comprises a lower amount of spatial higher-frequency components compared to a respective 2D barcode. The focus pattern may comprise a high contrast, low spatial frequency pattern this way, which may help a camera 222 in quickly and reliably achieving focus before recording the 2D barcode video. In reference to the above formulas, a resolving focus pattern may opt for a high contrast $C$ and a low spatial contrast gradient $\nabla C$, in order to overcome delays and inefficiencies associated with autofocus in existing camera systems.

The focus pattern, comprising a high-contrast pattern and a low spatial frequency, may be displayed. The focus pattern may remain static for a few seconds before showing the 2D barcode video in a center of a screen of, e.g. a display. The focus pattern may be large and uniform. This way, the focus pattern may offer a receiving camera a visual reference in order to quickly and effectively auto-focus on a display 142 of a sender device 100. By presenting the focus pattern immediately before the barcode video, the camera may be given enough time to achieve a sharp image of the barcode. This may ensure that the subsequent data transmission occurs without a delay or a distortion due to focusing issues.

Given that the camera may lose focus over time, particularly with moving or changing video content, the autofocus pattern may be displayed intermittently. For instance, the focus pattern may be displayed time-alternatingly with the 2D barcodes, e.g., at regular intervals, such as displaying the focus pattern for, e.g., two seconds every ten seconds. Such a periodic presentation may allow the camera to re-establish focus if it has drifted out of focus during the data transfer. The low spatial frequency of the focus pattern may ensure that the focus pattern may be easily detected and processed by regular autofocus systems, which require sufficient contrast to function effectively.

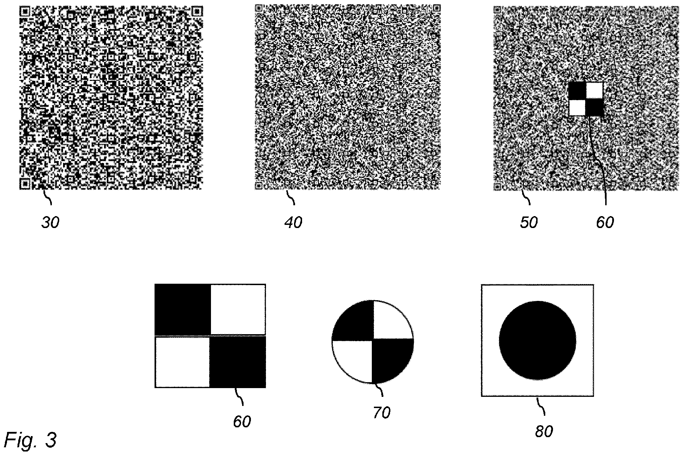

**Fig. 3** illustrates several embodiments of focus patterns 60, 70, 80, comprising high-contrast, low-spatial frequency patterns compared to a regular 2D barcode 30, 40. The regular 2D barcode 30, 40 may comprise a standard QR code, e.g., a version 25 QR code 30, comprising 117 × 117 blocks, or a version 40 QR code 40, comprising 177 × 177 blocks. The regular 2D barcodes may demonstrate a high spatial frequency. The focus pattern 60, 70, 80 may demonstrate advantages of using a method according to the third aspect of the presently disclosed subject matter in maintaining a consistent focus throughout data transmission processes.

Focus pattern 60 may comprise an example of a square spatial pattern to improve auto-focus speed. Focus pattern 70 may comprise an example of a circular spatial pattern to improve auto-focus speed. Focus pattern 80 may comprise another example of a circular spatial pattern to improve auto-focus speed.

A dynamic 2D barcode frame 50, e.g. a version 40 QR code, may comprise a focus pattern, e.g. a focus pattern comprising a square spatial pattern 60.

In some examples, the focus pattern 60 may be displayed as an insert within a spatial perimeter of a respective 2D barcode 50, for example, centrally within the spatial perimeter, as is shown in Fig. 3. Focus pattern 60, 70, 80 may be shown centrally within the spatial perimeter of the dynamic 2D barcode 50 continuously. Optionally, focus pattern 60, 70, 80 may be shown below within a spatial perimeter of the dynamic 2D barcode 50, e.g., continuously. In an example, focus pattern 60, 70, 80 may be at either of a central position and a position below with respect to the spatial perimeter. Focus pattern 60, 70, 80 may be shown only part of the time, e.g., two out of ten seconds. Focus pattern 60, 70, 80 may disappear, e.g., periodically, e.g., eight out of ten seconds. This way, a full spatial bandwidth of the dynamic 2D barcode 50 may be used. In some examples, the code may be shown repeatedly over time. For example, the code may be visible, e.g., every ten seconds during two seconds.

In some examples, the 2D barcode video starts with a low level, e.g., 20, and at a low refresh rate, e.g., 10 Hz. Then, for example after a few seconds, the 2D barcode video may start to reach a full speed and a high spatial resolution of transfer, e.g. 60 Hz and/or at a level of, e.g., 40. The low-level 2D barcode may itself be used as a focus pattern in order to trigger the auto focus, while it may still transfer some data. The transfer of data for the low-level 2D barcode may be much less than a transfer of data a for a full high-density code, e.g., of level 40 or higher. The low level 2D barcode may be placed centrally within the spatial perimeter of the high level 2D barcode.

In some examples, focus pattern 60, 70, 80 may vary over time. Focus pattern 60, 70, 80 may vary over time with a low temporal frequency. This way, the auto-focus of the camera may have enough information to determine a focus distance. For example, focus pattern 60, 70, 80 may rotate slowly over time.

Various pattern types and positions may be tested in order to identify an optimal configuration for different display sizes and camera systems. For instance, testing may reveal that certain mobile devices and/or webcams may respond better to centrally located focus patterns. Similar and/or other devices may perform better when focus pattern 60. 70, 80 may be displayed intermittently. A choice of temporal frequency for varying focus pattern 60, 70, 80 may be customized. A customization may be based on an autofocus speed and/or an accuracy of a camera used. Incorporating such adjustments may ensure a broad compatibility with various devices and/or settings.

In some examples, an interface, such as a user interface, may be integrated. An interface may allow a sender to select a desired pattern mode. A desired pattern mode may be, e.g., continuous or alternating. A selection of a desired pattern mode may further enhance an effectiveness of a resulting system. The aforementioned types of customization may allow for a flexibility depending on the specific data transfer scenario and a type of receiving camera being used.

In an embodiment, the method may be implemented, e.g., in a computer application comprising a sender app and a receiver app. In the sender app, which may be run on, e.g., a computer and/or a mobile phone with a display, a file may be selected for transfer. In the receiver app, which may be run on, e.g., a computer and/or a mobile phone with a camera, a transmitted video signal may be recorded and decoded to the file.

In an example implementation, sender device 100 may be a computer comprising a screen, and/or receiver device 200 may be another computer comprising a camera. In another example implementation, sender device 100 as well as receiver device 200 may be mobile phones. Any other combination of computers and mobile phones may be an option as well.

In an example implementation, the method may be used for ticketing to access an event. In another implementation, the method may be used to extract files from a secure IT or OT domain, e.g., IT in Operation Technology. This way, a risk may be avoided to infect the secure domain with a virus or other malware. Beyond these example implementations, the method may hold potential for a wide range of other applications. For instance, it may be utilized in industrial settings for transferring operational data securely and efficiently between machinery and control systems. In healthcare, the method may facilitate rapid and accurate transmission of medical data between devices for real-time diagnostics. Additionally, in the realm of augmented reality (AR), the method may enhance the efficiency of data exchange between AR glasses and external displays, improving user experience. The method may be suitable for diverse fields requiring reliable and fast data transfer under varying conditions.

2D barcodes, such as QR codes, generally have a square shape, with a width equal to a height. A spatial component of a dynamical QR code therefore may comprise a square shape as well. However, cameras on modern mobile phones and other image-sensor device generally may record in a different aspect ratio, e.g., a 16:9 aspect ratio. Although the actual camera sensors may generally not be in a 16:9 ratio, but in, e.g., a 4:3 aspect ratio, software implementations may enforce the usage of a 16:9 aspect ratio for recording a message from a dynamical 2D barcode, as well as for receiving a message from a dynamical 2D barcode. Due to this, situations may generally occur wherein certain areas of a camera view, which generally is not of a square shape, may not be not covered by the 2D barcode, which are generally of a square shape. For example, in the case of a 16:9 aspect ratio of the camera view, a fraction of the not-covered area of the camera view may be at least $\frac{16-9}{16} = 43.75\%$. If that part of the camera view area may be, partly or wholly, covered as well with a visual code, this may help to squeeze more data into a single, spatial 2D barcode. This may improve a total speed of a transmission of the data.

In the following, the various steps and options represent method steps of a computer-implemented method as described in this specification.

In an embodiment, an aspect ratio of the 2D barcodes may be selected based on an aspect ratio of the image sensor of the receiver device or an aspect ratio of captured images by the receiver device. By selecting an aspect ratio of the 2D barcodes based on an aspect ratio of the image sensor of the receiver device or an aspect ratio of captured images by the receiver device, an available camera view area may be optimized, by covering as much of the available as possible with the visual code.

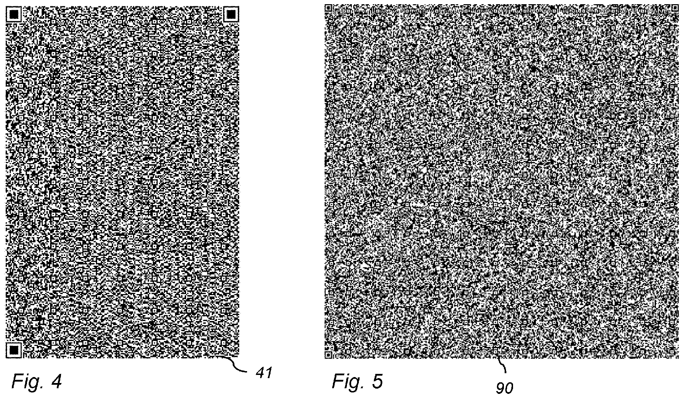

**Fig. 4** shows an example of a rectangular dynamic 2D barcode frame 41. In this example, a 2D barcode shape, which generally is square, may be generalized into a rectangular shape 41. A ratio of two sizes of the rectangular shape 41 may be arbitrary. There may be no constraints on the ratio of two sizes of the rectangular shape 41. An aspect ratio may be, e.g., 16:9, 3:2, or any other ratio. The aspect ratio may be selected depending on an application.

In some examples, the method may comprise "stretching" the 2D barcode 41 along the y axis. Stretching the 2D barcode 41 along the y axis means that the side that contains top-left and bottom-left finder patterns will be the longer side of the rectangle 41, while the side that contains top-left and top-right finder patterns may be made shorter. The finder patterns will still be in the same corners of the newly formed rectangle 41. In the original 2D barcode, the number of data elements the 2D barcode may comprise in one size may be calculated by a formula, e.g. the formula $4 \times version + 17$. This means that the size may be any number which gives a remainder 1 when divided by 4. In order to keep this condition, the number of data elements in the horizontal and vertical direction of the 2D barcode may be selected to each meet a modulo condition, for example requiring that the number of data elements modulo 4 equals 1, in order to keep a natural generalization of the 2D barcode 41 into a rectangular shape. Keeping the modulo condition may help to properly implement timing and alignment patterns.

However, the modulo condition may prevent having an exact desired aspect ratio. For example, as both side lengths may have remainder 1 when divided by 4, they may be prevented from comprising a 16:9 aspect ratio, since 16 is divisible by 4. It may be possible to make the aspect ratio of the 2D barcode close enough to a desired one.

Note that a respective 2D barcode for a square aspect ratio may comprise finder patterns arranged at corners of the 2D barcode and an equal number of data elements in a horizontal and vertical direction of the 2D barcode. In some examples, a method in accordance with the fourth aspect of the presently disclosed subject matter may further comprise generating a respective 2D barcode for a non-square aspect ratio by at least one of:

- increasing the number of data elements between finder patterns in one direction; and
- adding data elements outside of a square bounding box defined by the finder patterns.

For example, the alignment pattern grid may not be square anymore, as one side, e.g., the y side, the longer side, may comprise length 201 modules as data elements, while the other side, the shorter side, may comprise length 173 modules as data elements. The longer side may correspond to version 46, and/or the other side may correspond to version 39. In order to find alignment pattern positions, a method may be used in order to calculate positions of alignment patterns for version 46. The method may be a method as described elsewhere in this specification. This way, the y coordinates in the current, rectangular 2D barcode may be provided. Analogously, the *x* coordinates in the current, rectangular 2D barcode may be provided for version 39. Using the provided coordinates, the grid of alignment patterns may be obtained. Positions of reserved areas, which may store functional information, for example, information about versions, error corrections, and/or masking, may stay the same around the finder patterns.

Error correction configurations may be calculated. The error correction configuration may be Reed-Solomon error correction configurations. In order to calculate the error correction configurations, a method may be used as described elsewhere in this specification. The error correction configuration may be independent of an actual geometry of the 2D barcode. A number of total bits, which may describe a physical capacity of the 2D barcode, may be calculated.

An aspect ratio of the resulting rectangle 2D barcode may be known in advance to the receiver, as it may not be readable from the 2D barcode data itself. The aspect ratio may have to be known in advance to the receiver, since the aspect ratio is generally crucial when detecting finder patterns. The aspect ratio may be used to rule out other potential finder patterns, e.g., all other potential finder patterns except three finder patterns, e.g. the ones positioned in the corners of the 2D barcode. Reading any other potential information from the 2D barcode may happen after reading the aspect ratio; the aspect ratio may be part of any prior knowledge which may be shared between the sender and the receiver.

In some examples, positions of finder patterns may be kept constant. Data elements and/or additional alignment patterns may be added, e.g., between finder patterns in one direction, e.g., a direction along the longer side of the rectangle, and/or outside of a square bounding box, e.g., defined by the finder patterns. A number, e.g., three, of finder patterns may be arranged at corners of the square 2D barcode. The finder patterns may be used for 2D barcode positioning. The finder patterns may define a square bounding box this way, while additional data may be arranged outside of the square bounding box of this square. In order to properly read the additional data, additional alignment patterns may be arranged among the data. Additional alignment may be arranged among the data because of radial distortion, which may be omnipresent. A same modulo condition, e.g., that a size may be any number which gives a remainder 1 when divided by 4, may be a constraint. The modulo condition may be constrained for both dimensions. Having the modulo condition for both dimensions may enhance a seamless implementation. An analogous method as described as above may be used to calculate the positions. This embodiment may be advantageous, as, it may not be necessary to provide an aspect ratio in advance to the receiver. It may not be necessary to provide an aspect ratio to the receiver in advance, as it may not be needed to determine the position of the finder patterns and the code itself. Since the aspect ratio may not be provided here as a prior knowledge, it may be placed inside the code, e.g., as a part of the version information. This may, for example, be incorporated in the design of the reserved areas around the markers.

In an embodiment, the method may be implemented in the cases on high-capacity 2D barcodes, e.g., high-capacity QR codes, or on streams of 2D barcodes, e.g., streams of QR codes, for example, as part of off-line communication between devices provided with a screen and/or a camera, for example, when other methods of communication may not be available, e.g., when there may be no WiFi, and/or when such communication is not an option, e.g., in military applications.

In the described methods for unidirectional transfer of data using dynamic 2D barcodes, the dynamic 2D barcodes generally are displayed sequentially, which may be described by means of a data stream comprising 2D barcodes, which may be stacked temporally and sent in a video form a sender to a receiver with a camera. The dynamic 2D barcodes may generally bounded with respect to their size. For example, a maximum size which may be achieved may be a size of, e.g., $177 \times 177$ data elements for the case of version 40, e.g., modules, tiles, and/or black and/or white squares, on a 2D barcode, each representing, e.g., a single bit of information. For example, a version 40 QR code may hold up to roughly 3kB of information. For each version with a number less than or equal to 40, there may be a QR code of which a size in one dimension is given in formula form

$$size = 4 \times version + 17$$

However, modern cameras, e.g. cameras on mobile phones, for which a resolution may go up to 4k or 2160 pixels in width, are generally capable to capture way more information than 177 data elements in width. This may lead to an unused space on high-resolution images. The unused space may create a demand for having high-density dynamic 2D barcodes which may contain much more data, as this may allow them to transmit larger files and/or in a shorter amount of time.

In the following, the various steps and options represent method steps of a computer-implemented method as described in this specification.

In an embodiment, high-density dynamic 2D barcodes may be generated which may contain much more data, as this may allow them to transmit larger files and/or in a shorter amount of time. Conventional 2D barcodes, such as conventional QR codes, are generally of level 1 to 40. 2D barcodes, such as QR codes, which are of level 41 and above may be proposed as high-density 2D barcodes, such as high-density QR codes.

In order to arrive at high-density 2D barcodes, rules, or formulas, may be developed and formulated on how to generate a configuration of a 2D barcode of an arbitrary size. A configuration of a 2D barcode of an arbitrary size may comprise two main parts: a placement of alignment patterns on a 2D barcode, and, for each error correction level, e.g., low, medium, quartile, and/or high, a calculation of a number and sizes of error correction blocks, e.g., Reed-Solomon error correction blocks. Other parts of the 2D barcode, such as finder patterns, may remain unchanged.

A sender may receive, e.g., on a sender device 100, from the receiver device 200 information on a radial distortion on the receiver device 200. Sender device 100 may generate one or more spatial markers on the 2D barcodes, wherein the one or more spatial markers may be used to enable receiver device 200 to correct a radial distortion on receiver device 200. The alignment patterns comprise spatial markers, which may be specific markers on the 2D barcode. The specific markers may be used to correct a radial distortion, which may be present on an image which may have captured a 2D barcode. The generating of the one or more spatial markers may comprise determining a level of the radial distortion. The generating of the one or more spatial markers may further comprise determining a number of spatial markers based on the level of the radial distortion. For the placement of alignment patterns, for each version, a number of alignment patterns necessary to keep the radial distortion performance. The generating of the one or more spatial markers may further comprise determining spatial coordinates of the spatial markers on the 2D barcodes. This may provide a geometric outskirt of the 2D barcode. The generating of the one or more spatial markers may further comprise determining error correction levels corresponding to the radial distortion. The generating of the one or more spatial markers may further comprise, for each of the error correction levels, determining error correction parameters, the error correction parameters defining error correction blocks characterizing the 2D barcodes. The generating of the one or more spatial markers may further comprise, based on the determining of the error correction parameters, configuring the corresponding error correction blocks.

In some examples, for each error correction level, the configuration of a single error correction block, and/or the number of such blocks may be determined. The error correction blocks may be Reed-Solomon error correction blocks. The error correction blocks may comprise information on data and parity. For example, a single error correction block may comprise a certain number of data bytes and/or parity bytes. The information may be used to retrieve original information, e.g., in case that the code may be damaged. For example, there may be a configuration comprising, e.g., two such blocks, which may be necessary to fill the whole 2D barcode with data. A number of error correction blocks may be determined for both configurations, which may complete the 2D barcode characterization. A method in accordance with the fifth aspect of the presently disclosed subject matter may accordingly comprise

- for each of the error correction blocks, retrieving the information on data and parity;
- if the 2D barcodes are damaged, using the information on data and parity to retrieve original information on the 2D barcodes.

**Fig. 5** illustrates an embodiment of a high-density dynamic 2D barcode frame 90. The high-density dynamic 2D barcode frame 90 may be a single frame from a high-density dynamic QR code, which may be generated according to a method in accordance with the fifth aspect of the presently disclosed subject matter. The high-density dynamic QR code may be a QR code of version 80, comprising $337 \times 337$ data elements, e.g., modules. With such 2D barcodes, more space may be covered on a high-resolution image than using a regular 2D barcode, while the data to be transferred may be maintained readable. For example, a full HD camera, with resolution 1080p, will generally have no problem reading 2 2D barcode comprising 337 data elements in one dimension, as for each data element roughly $3 \times 3$ physical pixels, for example, may be used to represent it. This may be more than enough to avoid undesired effects of image processing.

In what follows, in an example, more details may be provided on the configuration construction of a 2D barcode for higher levels than 40, starting with the alignment patterns. The first number in all configurations may be always 6, which means that the $x$ coordinate of the most left patterns and the y coordinate of the most top patterns is 6. This may be to ensure alignment with the finder patterns, which may be of fixed size in all versions. For the same reason, the last number may be equal to *size* - 7, where *size* may be defined by the formula *size* = $4 \times$ *version* + 17. This formula may hold for all 2D barcodes, such as QR codes. In this example, the position of the last alignment pattern may be equal to $4 \times 40 + 17 - 7 = 170$. Now, one may develop a particular rule on how to determine the positions of the other alignment patterns. Assume that the number of alignment patterns may be known, which may be 7 in our example. One may determine the step size, or step sizes, which may be the difference between two consecutive values. There may be 6 differences, e.g., 5 numbers in the middle and 2 on either end. Therefore, the step size may be somewhere close to (170 - 6)/6 = 27.33. However, the step size generally is integer and, moreover, an even integer, since some alignment patterns, of which the center may be black, may lie on the timing pattern, which may have alternating black and white modules. Black ones may lie on even coordinates. Hence, some steps may be of size 26, and some steps may be 28. In order to determine how many there may be, one may use that 164 = 26 * 6 + 8 = 26 * 2 + 28 * 4. In conclusion, there may be 4 steps of size 28 and 2 steps of size 26. In order to determine where to apply which step size, it may be noted that, in an original QR code, larger step sizes may be applied from the end. So, the following values going from the right to left may be 170, 170 - 28 = 142, 142 - 28 = 114, 114 - 28 = 86, 86 - 28 = 58, 58 - 26 = 32, 32 - 26 = 6, and the configuration may be {6, 32, 58, 86, 114, 142, 170}.

In some examples, all step sizes may be kept the same except the last one. The last step size may be rounded up from the ratio determined above: in this case 28. In the example, this means that there may be 5 steps of size 28 and 1 step of size 24. Hence, the following values going from the right to left may be 170, 170 - 28 = 142, 142 - 28 = 114, 114 - 28 = 86, 86 - 28 = 58, 58 - 28 = 30, 30 - 24 = 6, which may give the configuration {6, 30, 58, 86, 114, 142, 170}.

Note that the two configurations differ from each other. In the first configuration, a criterion to be met was to have alignment patterns uniformly distributed. This may ensure that they serve their purpose in the best possible way; to eliminate the radial distortion. Having more skewed configurations may make this task harder.

The number of alignment patterns may be known. However, that number may get larger along a larger version number. In order to calculate such a number, the following characteristics of the configurations in the original QR code settings may be noted: that there may be no step size which is larger or equal than 30. All of them are smaller. This principle may be implemented for general 2D barcodes of large versions as follows.

Iterating trough 2D barcode versions calculating configurations, the number of alignment patterns may be kept fixed until the determined ratio is larger than 28. The formula for the ratio may be

$$(last\_number - first\_number)/(current\_number\ of\_patterns - 1) > 28.$$

Once this may be the case, the number of patterns may be increased by 1. With this algorithm, it may be ensured that for each version, the step size is smaller than 30.

The next step may be to calculate the configurations for the error correction, i.e., the structure of the error correction blocks. From original QR codes, it may be noted that there are always two types of Reed-Solomon error correction blocks, where both have the same number of parity bytes, while the larger block has exactly 1 data byte more. This reasoning may be followed when constructing the blocks for the larger 2D barcode versions. First, the numerical amount of error correction present in each of four provided configurations may be determined: low, medium, quartile and high. The amount may be determined by the ratio of the parity bits and the total number of bits. In the example, for the low level of error correction, the fraction of parity bits may be 25 × 30/(19 × (118 + 30) + 6 × (119 + 30)) = 0.2024.

Approximately, there may be around 20% parity bytes in this case. With a closer inspection of all the 2D barcode versions, it may be concluded that the amount of parity bytes for different levels of error correction may be the following: low level may have around 20% of parity bytes, medium level may have around 35%, quartile level may have around 50%, while the high level may have around 65%. These numbers may be followed in constructing the large-version 2D barcodes. In the construction, any level of error correction may be provided which gives us a complete flexibility when adjusting the levels of error correction for desired particular needs of a communication protocol.

In order to calculate the Reed-Solomon blocks configuration, one may start by calculating the physical capacity of 2D barcodes for different versions. One may do so by determining the number of modules for the code, which may be equal to 177 × 177 = 31329 bits in the, and the subtracting the size of all functional patterns and reserved areas, the parts that will not contain any content of the 2D barcode. Once one may have the capacity in bits, one may divide it by 8 and the integer result may be the actual capacity in bytes.

In some examples, three principles may be fixed for calculating the configuration of the 2D barcode. In the first principle, one may fix the number of parity bytes and calculate the rest of the configuration. One may observe that for QR codes of all versions between 27 and 40, the number of parity bytes for different error-correction levels may be 30, 28, 30, 30 respectively, as may be apparent from the example. As a second principle, one may state that the number of data bytes in two different configurations may differ by 1, as may be the case from before. As a third principle, one may state that the percentage of parity bytes is at least the defined number, e.g., 20, 35, 50, or 65 as stated above. This may mean that it may be hard to calibrate the exact percentage, but keeping it larger or equal, one may guarantee the certain performance of an error correction from the theory of Reed-Solomon codes. Using these three principles, one may uniquely determine the configuration.

First, one may determine the initial number of data bytes for a given number of parity bytes and the percentage of parity bytes. In the case of low-level error correction, where these two values may be 30 and 20, one may have that 0.2 = 30/(30 + x) which gives us x = 120; if x is not an integer, one may take the integer part of the result. Then, one may apply the following reasoning for, e.g., level 40 and a capacity of 3076:

$$3076 = (120 + 30) \times 24 + 106 = 150 \times 24 + 106 = 150 \times 25 - 44$$

$$= (150 - \lfloor\frac{44}{25}\rfloor) \times 25 - 44 \bmod 25 = 149 \times 25 - 19$$

$$= 149 \times 6 + 148 \times 19 = (119 + 30) \times 6 + (118 + 30) \times 19$$

More generally, if one may denote the capacity as *a*, 3076 in the example, while the codeword, e.g., data and parity bytes joined, length as *b,* 150 in the example, then from the division theorem one may know that there may be unique numbers *p* and *q* with *q* < *b* such that *a* = *p* * *b* + *q* (*p* = 24 and q = 106 in the example. Then, the configuration may be derived in the following way:

$$a = pb + q = (p + 1)b - (b - q) = \left( (p + 1) * \left( b - \left\lfloor \frac{b-q}{p+1} \right\rfloor \right) \right) - (b - q)\mathrm{mod}(p + 1)$$

$$= ((p + 1) - (b - q)\mathrm{mod}(p + 1)) * \left( b - \left\lfloor \frac{b-q}{p+1} \right\rfloor \right)$$

$$+ (b - q)\mathrm{mod}(p + 1) \times (b - \lfloor \frac{b-q}{p+1} \rfloor - 1)$$

The formula above may be a general form of how to derive the configuration in the example shown before. If one may denote the parity size with $r$, then the configuration may be of the form:

*{r, (b-q)mod(p+ 1),b - [(b-q)/(p+1)] -r -1, (p+1) - (b- q)mod(p+1),b-[(b-q)/(p+1)]-r}*

This configuration may be a unique one that follows the three principles set before.

In some examples, one may relax the constraint where one may require to have that two types of error-correction blocks differ by 1. In that case, using notations from above and from the expression: $a = pb$ + q, one may write the configuration in a much simpler form as: { $r, p, b - r$, 1, $q - r$ }. Then the configuration of our example from above may be {30, 24, 120, 1, 76}. By simple calculation, one may observe that the parity percentage may be the same as before, but in this case, one may have one block which may be significantly smaller than the others. Having such a single block may not seem influencing on the 2D barcode, especially for large versions. However, one may bear in mind that to have such configuration, one may have that $q > r$. If that is not the case, one may have only one type of blocks, while the remaining $q$ bytes may be filled with padding bits. This may not affect the data capacity of the 2D barcode, but it may just reduce the total number of parity bits, keeping it still above the predefined percentage.

In some examples, one may relax the assumption where the number of parity bytes may be a fixed number. In this case, one may take the following approach, again with the notations from above. Let $b = \lfloor \sqrt{a} \rfloor$. Then in the expression $a = bp + r$ it may hold that $p = b, p = b + 1$ or $p = b + 2$. One may then write $a = bp + $ r $= (p - r) \times b + r \times (b + 1)$. Here, one may know that $p - r > 0$ since $r < b \leq p$. If one may denote the fraction of parity bytes as $f$ as written before, then the configuration may look like

$$\{ \lceil fb \rceil, p - r, b - \lceil fb \rceil, r, b - \lceil fb \rceil + 1 \}$$

In the example from before, one may have that $b = \lfloor \sqrt{3706} \rfloor = 60$ which may lead to 3706 = 60 × 61 + 46 = 15 × 60 + 46 × 61 . For $f$ = 0.2, one may have $\lceil f(b + 1) \rceil = 13$ which may give the configuration: {13,15,47,46,48}.

In the previous, Reed-Solomon error correction types have been discussed in detail, analogously with the original QR code setting. However, when working with larger-version 2D barcodes of large version, individual data elements, such as modules, may generally become smaller, which may lead to more errors related to bitflips due to the color leaks from one pixel to another. Reed-Solomon codes work with bytes, and they serve better when the damage on the QR code is a localized contiguous area. If we deal with a uniformly distributed set of bit disturbances on the QR code, it may be better to use methods that deal with bit-level error correction. To this end, Low-Density Parity check (LDPC) codes may be used, as used in modern telecommunication protocols such as WiFi, 5G, etc. One may replace Reed-Solomon codes with LDPC codes, and/or may reconfigure settings as described above.

In an embodiment, the method may be implemented static 2D barcodes, e.g., static QR codes, for example, when the size of information when the size of information may exceed a memory limit, e.g., a memory limit of a regular QR code, which may be around, e.g., 3kB. A method in accordance with an embodiment of the fifth aspect of the presently disclosed subject matter may also be implemented in streams of 2D barcodes, e.g., streams of QR codes, for example, as part of off-line communication between devices provided with a screen and/or a camera, for example, when other methods of communication may not be available, e.g., when there may be no WiFi, and/or when such communication is not an option, e.g., in military applications.

In order to facilitate detection of the 2D barcodes on a received image from the video on the display, specific patterns called finder patterns may be used. Finder patterns comprise spatial markers, which may be displayed in spatial relation to the barcode data of respective 2D barcodes. This way, finder patterns may determine locations of the 2D barcodes on the display. By detecting the finder patterns in a displayed image, the location of a 2D barcode on the image may be determined, and positions of data elements comprising a message may be determined.

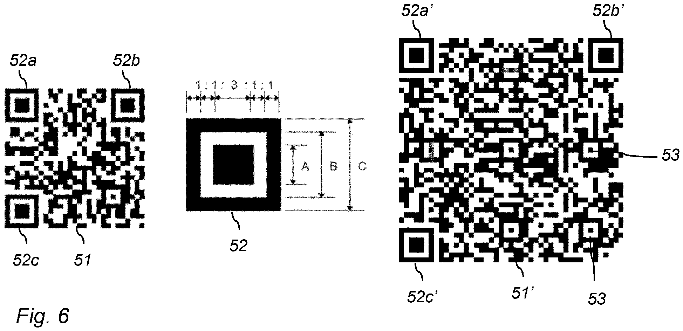

**Fig. 6** illustrates various embodiments of 2D barcode frames 51, 51' as well as embodiments of spatial markers 52, 52a, 52b, 52c, 52a', 52b', 52c', 53, such as finder patterns 52a, 52b, 52c, 52a', 52b', 52c' and/or alignment patterns 53 on the 2D barcode frames 51, 51'. Spatial markers 52, 52a, 52b, 52c, 52a', 52b', 52c', 53 are pre-defined structures, which are generally displayed as black-and-white structures. A 2D barcode frame may comprise one or more spatial markers in order to determine locations of the 2D barcode on a display; for example, a number of three spatial markers as finder patterns 52a, 52b, 52c. In 2D barcode frame 51, three finder patterns 52a, 52b, 52c are placed on the bottom-left, the top-left and the top-right positions of the 2D barcode frame.

A single spatial marker 52, e.g., a spatial marker of a finder pattern, may comprise one or more squares, which may have the same center point. For example, a spatial marker 52 may comprise a filled black square in the middle. The filled black square may comprise a length A and a width A of, e.g., three data elements long. Spatial marker 52 may further comprise a circumference of a white square around the filled black square in the middle. The white square circumference may comprise a length B and a width B of, e.g., five data elements long. Spatial marker 52 may further comprise a circumference of a black square around the white square circumference. The black square circumference may comprise a length C and a width C of, e.g., seven data elements long. The data elements may comprise modules, and/or tiles. The modules and/or tiles may comprise, for examples, the black and white squares on a QR code each representing a single bit of information.

In known 2D barcodes, for example in static QR codes, finder patterns generally scale with the data element size. Because of the scaling, the finder patterns may become relatively small and/or lower in resolution for high-density dynamic 2D barcodes. High-density codes may be of a size of, e.g., larger than $300 \times 300$ data elements, while finder patterns may generally be of a size of, e.g., $7 \times 7$ data elements. Next to the scaling with the data element size, finder patterns may become relatively smaller and less detectable due to different disturbances on an image. The disturbances on the image may be due to one or more of image postprocessing, and a process of color bleeding, in which shades of grey become more apparent. In these ways, the finder patterns may become less detectable and less distinguishable from the rest of the 2D barcode. It may be desirable to have finder patterns of which the size is adjustable based on the data element size of the 2D barcode. For example, the finder patterns may be enlarged in a 2D barcode of which the data element size is increased, e.g. a QR code of a high version, such as 40. The size of the finder patterns may then be a function dependent on the version number of a QR code.

Spatial markers such as finder patterns and alignment patterns are generally displayed in spatial relation to the 2D barcode data of respective 2D barcodes, to facilitate detection of the 2D barcodes on the display. The finder patterns typically determine locations of the 2D barcodes on the display. This way, the finder patterns serve for positioning of the 2D barcode on a captured image. The finder patterns may be the element of the code which is first detected by a receiver. The receiver may not know the size of the 2D barcode in advance. The size of the 2D barcode may be subject to change. It may therefore be desired to have different patterns for different 2D barcode versions. The same pattern may be used for all versions, with different sizes. Spatial coordinates of functional information on the 2D barcodes may be determined. Based on the spatial coordinates of the functional information on the 2D barcodes, the 2D barcodes may be generated such that the finder patterns are spatially aligned in relation to the functional information on the 2D barcodes. Then, finder patterns may be adjusted in size based on the functional information of the 2D barcode. For example, the size of the finder patterns may be adjusted based on the data element size of the 2D barcode. The finder patterns may also be spatially aligned in relation to the functional information on the 2D barcode. For example, the finder patterns may be spatially aligned in relation to the functional information such that there may be no overlap of the finder patterns with the functional information of the 2D barcode.

In the following, the various steps and options represent method steps of a computer-implemented method as described in this specification.

In an embodiment, patterns may be adjusted for different 2D barcode versions, for example, different QR code versions. For example, an original pattern may work well for all QR barcodes versions from 1 to 40. For version 41, the pattern may be doubled in size. A pattern doubling in size may mean that an outer black square circumference of the finder pattern 52 may have a size C of $14 \times 14$ data elements instead of the original $7 \times 7$ data elements. The inner white square circumference may have a size B of $10 \times 10$ data elements instead of a size of $5 \times 5$ data elements. The central black square may have a size A of $6 \times 6$ data elements instead of the original $3 \times 3$ data elements. The doubled sizes of the finder patterns 52 may remain fixed until QR barcodes of version 80. The QR barcode of version 80 may be approximately 2 times as large in size as the QR barcode of version 40. The new finder pattern, of doubled size, of the QR code of version 80 will be approximately of the same size in terms of data elements, e.g., physical pixels, as the original finder pattern of the QR barcode of version 40. The detectability of both finder patterns may be similar. For the QR barcode of version 81 and higher versions, the size of the original finder pattern may be tripled in size. Analogously, the finder pattern may remain tripled in size, e.g., $21 \times 21$ data elements, until the QR barcode of version 120. This process may be continued. In the process, the size of the finder pattern may be determined based on the size of the original finder pattern as follows: the scaling factor of the size of the finder pattern based on the size of the original finder pattern may be determined as $(v\text{-}1)//40 + 1$, where $v$ denotes the QR code version, and $//$ stands for integer division. The scaling factor may be denoted as the relative size of the finder pattern.

In an embodiment, the method comprises determining spatial coordinates of functional information on the 2D barcodes. For example, the method may further comprise adapting the spatial coordinates of the functional information, maintaining the relative position of the functional information with respect to the spatial markers. For example, the method may further comprise placing functional information in the vicinity of spatial markers. For example, the functional information may comprise one or more of format information, version information, a timing pattern, and spatial markers of the 2D barcodes. The functional information may comprise reserved areas, information on a format, information on a version, etc. The functional information may be placed around enlarged finder patterns. The functional information may be placed on the basis of a functional pattern. The functional pattern may be placed around the finder patterns. The functional pattern may follow positions which are relatively close to inner sides of the finder patterns relative to the 2D barcode 51. Functional information may be placed differently on the 2D barcode 51 depending on the information type. For example, format information may be placed on a different area, for example more on the outer side of the finder pattern relative to the 2D barcode, from version information, which may be placed on an area more on the inner side of the finder pattern relative to the 2D barcode. Similarly, a timing pattern may be placed on the 2D barcode. For example, the timing pattern may be placed stretching from an inner area of a finder pattern relative to the 2D barcode, e.g., an inner tip of a finder pattern, to an inner tip of another finder pattern. The timing pattern may be placed along a same dimension. A timing pattern may coincide with a functional pattern. For example, a timing pattern may coincide with a functional pattern around a finder pattern, e.g., a top-left finder pattern.

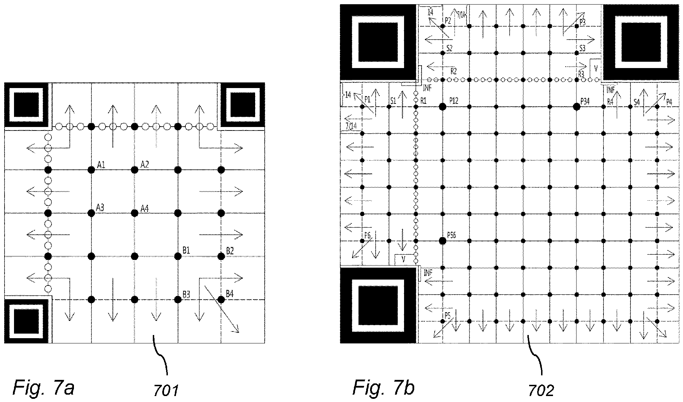

**Figs. 7a and 7b** illustrate various embodiments of designs 701, 702 of alignment patterns and finder patterns on 2D barcode frames. For example, in design 702, a functional pattern may be implemented. In design 702, functional information, such as information INF on a format, information V on a version, etc. may be placed around enlarged finder patterns. The functional information may be placed on the basis of a functional pattern. Spatial markers of the functional pattern, such as white separators, may be placed around the finder patterns. The functional pattern may follow positions which are relatively close to inner sides of the finder patterns.

In an embodiment, the method comprises generating the 2D barcodes such that the spatial markers of the finder patterns are spatially aligned in relation to the functional information on the 2D barcodes. For example, the 2D barcodes may be generated based on the spatial coordinates of the functional information on the 2D barcodes. For example, the method may further comprise placing alignment patterns. Alignment patterns may coincide with functional patterns and/or timing patterns. For example, one or more of the alignment patterns, e.g., the most left and the most top ones, may coincide with a timing pattern. Alignment patterns may be aligned the finder pattern. For example, alignment patterns may be aligned with edges of one or more of the squares in the finder pattern. An alignment pattern may be distanced from one or more edges of the 2D barcode. For example, a distance of an alignment pattern from a nearest edge of the 2D barcode may be equal to a size of a finder pattern, e.g., 7 data elements.

In the design 701 of **Fig. 7a,** a set of alignment patterns may be shown by way of black grid points on a grid. Alignment patterns may collect data comprised in the 2D barcode between alignment patterns and one or more edges of the 2D barcode. Interior tips of the finder patterns may also serve as a part of alignment patterns. Four neighboring alignment patterns may form a square. For example, the black grid points A1, A2, A3, A4 may form a square. The alignment patterns may collectively cover an amount of data which may be placed in the interior of the formed square. Data which may be placed directly next to the edges of the 2D barcode may not be part of any type of square which may be determined by alignment patterns. The task of reading data which may be placed directly next to the edges of the 2D barcode may be assigned to squares neighboring the originally formed square Other alignment patterns, for example, the square formed by alignment patterns B1, B2, B3, B4, may be arranged to read data from neighboring rectangles. The neighboring rectangles may be indicated by arrows in the figure. Squares formed at the interior of the 2D barcode, so not bordering the edges of the 2D barcode, may be arranged to collect data from corresponding outer rectangles which lie on the border of the 2D barcode. In Fig. 7a, arrows may indicate which inner squares may be arranged to collect data from corresponding outer rectangles. In the figure, the outer rectangles are shown as squares which may be provided with dashed lines.

Data elements placed in outer rectangles of a 2D barcode may not be significantly distant from data elements in the corresponding inner square of the 2D barcode, because of radial distortion. If a distance between data elements placed in outer rectangles of a 2D barcode and data elements in the corresponding inner square of the 2D barcode may be too large, data from the data elements may not be detectable and readable. The data modules in a 2D barcode may be placed at a maximal distance from the corresponding inner square in the 2D barcode. The maximal distance may be, e.g., 6 data elements.

Following the above process, when increasing the size of the finder pattern, the distance between the most outer alignment patterns and the edges of the 2D barcode may increase as well. For example, the distance between the most outer alignment patterns and the edges of the 2D barcode may become subsequently 7 data elements, a doubled amount of 14 data elements, a tripled amount of 21 data elements, etc. Because of this, some data modules from outer rectangles of the 2D barcode may have a substantially large distance from corresponding inner squares in the 2D barcode. The substantially large distance may allow radial distortion to disrupt the detectability and readability of data. To this end, additional alignment patterns may be added inside the outer rectangles.

Design 702 of **Fig. 7b** may be considered as an adaptation of the design 701 of Fig. 7a. Design 702 is adapted compared to design 701 in the addition of additional alignment patterns, and the enlarging of finder patterns. Additional alignment patterns may be added inside outer rectangles. The additional alignment patterns may again be denoted as black grid points on a grid in the 2D barcode. Additional alignment patterns may be considered pivot alignment patterns, and may be denoted by P1, P2, P3, P4, P5, P6. The additional alignment patterns P1, P2, P3, P4, P5, P6 may be placed in a vicinity of both the finder patterns and of the edges of the 2D barcodes. The distance between the additional alignment patterns P1, P2, P3, P4, P5, P6 and the finder patterns, and/or the distance between additional alignment patterns P1, P2, P3, P4, P5, P6 and the and the edges of the 2D barcodes may be kept relatively small. The additional alignment patterns P1, P2, P3, P4, P5, P6 may be positioned in such a way that the additional alignment patterns do not coincide with a timing pattern. Additional alignment patterns P1, P2, P3, P4, P5, P6 may not be necessary. For example, additional alignment patterns P1, P2, P3, P4, P5, P6 may not be necessary if the alignment patterns placed on the timing pattern may be able to read all the data in the 2D barcode correctly. For example, additional alignment patterns P1, P2, P3, P4, P5, P6 may not be necessary in the case of a low relative size of the finder pattern, e.g., a relative size of 2. For a relative size of 2, the distance from an edge of the 2D barcode may be 14 data elements, and the $x$ index of a most left alignment pattern may be data element number 13.

For a relative size of the finder pattern of 3 the $x$ index of an alignment pattern on the left timing pattern may be 20, and an additional alignment pattern P1, P2, P3, P4, P5, P6 may be added. The additional alignment pattern P1, P2, P3, P4, P5, P6 may be kept on distance of 7 or 14 data elements from the edge of the 2D barcode, and/or on distance of 14 data elements from the finder pattern as the relative size may be increased. The additional alignment pattern P1, P2, P3, P4, P5, P6 kept on distance of 7 data elements from the edge of the 2D barcode may give a different relative version of the finder pattern than the additional alignment pattern P1, P2, P3, P4, P5, P6 kept on a distance of 14 data elements from the edge of the 2D barcode. Starting indices 6 and 13 may be alternated for different relative versions of the finder pattern. The index may be set to be 6 in the following example.

For a relative size of the finder pattern of 3, the $x$ and y indexes for a first additional alignment pattern, denoted as P1, may be (6, 34). For a second additional alignment pattern P2, the indices may be (34, 6). An alignment pattern sharing coordinates with P1 and P2 may be denoted with P12. The pattern P12 may have coordinates (34, 34). Alignment patterns lying on a timing pattern, which may be denoted with R1 and R2, may have coordinates (20, 34) and (34, 20) respectively. Coordinates of analogous alignment patterns around a second finder pattern may be calculated, e.g., denoted as points P3, P4, P34, R3, R4, etc. Alignment patterns lying in between may be calculated according to a method described elsewhere in the presently disclosed subject matter. The positions of the alignment patters lying in between may depend on an actual 2D barcode version.

For a relative version of 4, the $x$ index of P1 may be 13. According to an alternation rule, coordinates (13, 41) for P1 and (41, 13) for P2 may be calculated. Alignment patterns may not have to be placed on even coordinates. Coordinates for point R1 may be (27, 41). Alignment patterns P1 and R1 may be adjacent in relative versions of 3 and 4. For a relative version of 5, the coordinates may be (6, 48) and (34, 48); for a relative version of 6, the coordinates may be (13, 55) and (41, 55). For a relative version of 7, the coordinates may be (6, 62) and (48, 62). For a relative version of 7, a distance in data elements between the coordinates may be more than 28 data elements. For a distance in data elements between the coordinates of more than 28 data elements, a creation of a new additional alignment pattern may be triggered. The $x$ index for the new additional alignment pattern may be 20, and the coordinates may be (20, 62). For versions of larger numbers, more patterns between P1 and R1 may emerge. The position of the patterns may be calculated analogously to the above approach. Using the analogous approach, all alignment patterns for all 2D barcode versions may be generated. The data points may not be significantly far from a corresponding inner square, such that all data may be detectable and readable. The interior squares may be able to collect all data from corresponding outer rectangles.

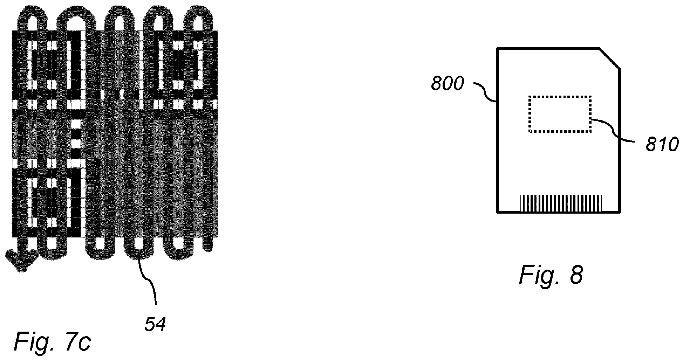

The data content of the 2D barcode 51 may be placed around newly placed functional patterns and reserved areas. The data content of the 2D barcode 51 may be placed analogously to the data content placement in the original 2D barcode. When regions of function patterns 53 and reserved areas may be determined, a direction 703 to place data content may be shown in **Fig. 7c.** Data placement may follow a direction 703 from an image, while specific region may be skipped. The specific regions which may be skipped may be regions of function patterns 53, and/or reserved areas. The specific regions may be skipped until all data may be placed. The data placement may be analogous to data placement in the original 2D barcode.

The actual design of finder patterns may not influence an implementation. Placement of specific areas may be independent from design. A relative size may affect implementation. Arbitrary designs of finder patterns may be used. For example, circular shapes may be used in the designs for finder patterns. A rotated square shape, e.g., rotated by 45 degrees, may be used in the designs for finder patterns. Finder patterns may comprise more concentric squares, instead of only three concentric squares. For example, 4, 5, 6 concentric squares may be used. Colors of the finder patterns may be alternated, and/or inverted. For example, the most inner concentric square in the finder pattern may be white, etc.

Cutoffs for changing a relative size of finder patterns may not have to be fixed. The cutoffs may be multiples of 40, as above. Other cutoffs may apply as well. For example, high-resolution cameras may detect finder patterns of a relative size of 1 for 2D barcodes of versions larger than 40. The relative cutoffs may be multiples of a different number, e.g., 30. Instead of multiples of a constant number, the cut-offs may vary. The cut-offs may vary as long as the camera may be able to detect the finder patterns without interruption.

If a scanning device, such as a camera, may support colors, spatial makers may be implemented having different colors from the colors of the data. For example, the finder patterns may be of a color, e.g., red and/or blue, while the data part may be green. The data part may also remain white, while the finder patterns may become green. If the scanning device may support multiple channels, separating finder patterns and data parts by the multiple channels may lead to an easier detection of finder patterns, as the finder patterns may be detected in a specific channel not containing data. The search is then rendered less challenging to the used algorithm.

In an embodiment, a specific shape may be used for the finder patterns, such as a star shape or a rosette. More advanced detection techniques may be necessary, such as neural networks for object detection, e.g. a YOLO model for object detection. Any type of shape may be selected on the basis of which choice a detection algorithm may detect the shapes in an optimal manner.

In an embodiment, the method may be implemented in the cases on high-capacity 2D barcodes, e.g., high-capacity QR codes, or on streams of 2D barcodes, e.g., streams of QR codes, for example, as part of off-line communication between devices provided with a screen and/or a camera, for example, when other methods of communication may not be available, e.g., when there may be no WiFi, and/or when such communication is not an option, e.g., in military applications.

It is noted that the embodiments, measures and aspects of the presently disclosed subject matter may be applied individually. Different embodiments, measures and/or aspects of the presently disclosed subject matter may also be combined.

In general, each entity described in this specification may be embodied as, or in, a device or apparatus. The device or apparatus may comprise one or more (micro)processors which execute appropriate software. The processor(s) of a respective entity may be embodied by one or more of these (micro)processors. Software implementing the functionality of a respective entity may have been downloaded and/or stored in a corresponding memory or memories, e.g., in volatile memory such as RAM or in non-volatile memory such as Flash. Alternatively, the processor(s) of a respective entity may be implemented in the device or apparatus in the form of programmable logic, e.g., as a Field-Programmable Gate Array (FPGA). Any input and/or output interfaces may be implemented by respective interfaces of the device or apparatus. Each functional unit of a respective entity may be implemented in the form of a circuit or circuitry. A respective entity may also be implemented in a distributed manner, e.g., involving different devices or apparatus.

It is noted that any of the methods described in this specification, for example in any of the claims, may be implemented on a computer as a computer implemented method, as dedicated hardware, or as a combination of both. Instructions for the computer, e.g., executable code, may be stored on a computer-readable medium 800 as for example shown in Fig. 8, e.g., in the form of a series 810 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, etc. Fig. 8 shows by way of example a memory device 800. The computer-readable medium 800 may be transitory. The computer-readable medium 800 may be non-transitory. The computer-readable medium 800 may comprise data 810. The data 810 may comprise instructions. The instructions may be arranged to cause a processor system 160 to perform any computer-implemented method according to an embodiment in the presently disclosed subject matter.

Examples, embodiments or optional features, whether indicated as nonlimiting or not, are not to be understood as limiting the invention as claimed.

Mathematical symbols and notations are provided for facilitating the interpretation of the invention and shall not be construed as limiting the claims.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1.  A computer-implemented method for unidirectional transfer of data from a sender device (100) to a receiver device (200), wherein the sender device (100) comprises or is connected to a display (142) and the receiver device comprises or is connected to an image sensor (222), the method comprising, at the sender device (100):

    - accessing data to be transmitted to the receiver device (200);
    - encoding respective parts of the data to generate respective 2D barcodes (10, 20, 30, 40, 50, 51, 90);
    - sequentially displaying the 2D barcodes (10, 20, 30, 40, 50, 51, 90) on the display (142), to enable the receiver device (200) to capture said displayed 2D barcodes (10, 20, 30, 40, 50, 51, 90) using the image sensor (222) and to decode said captured 2D barcodes (10, 20, 30, 40, 50, 51, 90) to obtain a received version of the transmitted data;

    wherein the method further comprises:

    - selecting values of one or more information density parameters, wherein the one or more information density parameters determine a data transfer rate of the unidirectional transfer of the data to the receiver device (200), wherein the values of the one or more information density parameters are selected based on an estimate of a capability of the receiver device (200) to successfully capture and decode the 2D barcodes (10, 20, 30, 40, 50, 51, 90) generated using the one or more selected parameters; and
    - using the selected parameters to generate and display the 2D barcodes (10, 20, 30, 40, 50, 51, 90).

2.  The method according to claim 1, wherein the one or more information density parameters determine one or more of:

    - a spatial resolution of a respective 2D barcode (10, 20, 30, 40, 50, 51, 90);
    - a complexity or type of a respective 2D barcode (10, 20, 30, 40, 50, 51, 90), such as a QR code version;
    - an error correction level for the encoding of the data;
    - a number of distinct states per data element of a respective 2D barcode (10, 20, 30, 40, 50, 51, 90); and
    - a duration of display of a respective 2D barcode (10, 20, 30, 40, 50, 51, 90).

3.  The method according to claim 1 or 2, further comprising:

    - obtaining the estimate of the capability of the receiver device (200) to successfully capture and decode the 2D barcodes (10, 20, 30, 40, 50, 51, 90) by obtaining receiver data from the receiver device (200);
    - selecting the values of the one or more information density parameters based on the receiver data, for example by adjusting previous values of the one or more information density parameters.

4.  The method according to claim 3, further comprising obtaining the receiver data from the receiver device (200) using a unidirectional data transfer scheme, for example using:

    - one or more 2D barcodes (10, 20, 30, 40, 50, 51, 90) displayed by the receiver device (200) on a display (242);
    - a coded light transmission by the receiver device (200); or
    - an audio transmission by the receiver device (200).

5.  The method according to claim 3 or 4, wherein the receiver data comprises configuration data indicative of a capture configuration of the receiver device (200), for example indicative of a spatial capture resolution, field of view, or temporal capture rate.

6.  The method according to any one of claims 1 to 5, wherein selecting the one or more information density parameters comprises receiving a user selection of values of the one or more information density parameters, for example from a user interface element which allows a user to adjust the values of the one or more information density parameters.

7.  The method according to any one of claims 1 to 6, further comprising generating and displaying a focus pattern (60, 70, 80) to assist the receiver device (200) in auto-focusing on the display (142) of the sender device (100), wherein the focus pattern (60, 70, 80) is generated to comprise a lower amount of spatial higher-frequency components compared to a respective 2D barcode (10, 20, 30, 40, 50, 51, 90).

8.  The method according to claim 7, further comprising displaying the focus pattern time-alternatingly or simultaneously with the 2D barcodes (10, 20, 30, 40, 50, 51, 90), preferably as an insert within a spatial perimeter of a respective 2D barcode (10, 20, 30, 40, 50, 51, 90), more preferably centrally within the spatial perimeter.

9. The method according to any one of claims 1 to 8, further comprising selecting an aspect ratio of the 2D barcodes (10, 20, 30, 40, 50, 51, 90) based on an aspect ratio of the image sensor (222) of the receiver device (200) or an aspect ratio of captured images by the receiver device (200).

10. The method according to claim 9, further comprising obtaining receiver data from the receiver device (200) which is indicative of the aspect ratio of the image sensor (222) of the receiver device (200) or the aspect ratio of the captured images by the receiver device (200).

11. The method according to any one of claims 9 or 10, wherein a respective 2D barcode (10, 20, 30, 40, 50, 51, 90) for a square aspect ratio comprises finder patterns (52, 52a, 52b, 52c, 52a', 52b', 52c') arranged at corners of the 2D barcode (10, 20, 30, 40, 50, 51, 90) and an equal number of data elements in a horizontal and vertical direction of the 2D barcode (10, 20, 30, 40, 50, 51, 90), wherein the method comprises generating a respective 2D barcode (10, 20, 30, 40, 50, 51, 90) for a non-square aspect ratio by at least one of:

    - increasing the number of data elements between finder patterns (52, 52a, 52b, 52c, 52a', 52b', 52c') in one direction; and
    - adding data elements outside of a square bounding box defined by the finder patterns.

12. The method according to any one of claims 1-11, wherein a 2D barcode comprises data elements, wherein a data element has a data element size, the method further comprising:

    - displaying spatial markers (52, 52a, 52b, 52c, 52a', 52b', 52c') in spatial relation to the barcode data of respective 2D barcodes (10, 20, 30, 40, 50, 51, 90) to facilitate detection of the 2D barcodes (10, 20, 30, 40, 50, 51, 90) on the display (142), the spatial markers (52, 52a, 52b, 52c, 52a', 52b', 52c') determining locations of the 2D barcodes (10, 20, 30, 40, 50, 51, 90) on the display (142),
    - based on the spatial relation of the spatial markers to the barcode data, adjusting a size of the spatial markers to an integer multiple of the data element size.

13. The method according to claim 12, wherein the 2D barcodes comprise QR codes, the QR codes being of a QR code version $v$, the method comprising

    - adjusting the size of the spatial markers by multiplying the data element size with a scaling factor, wherein the scaling factor is determined as $(v - 1)//40 + 1$, where // stands for integer division.

14. A computer program comprising instructions arranged to cause a processor system (160) to perform the method according to any one of claims 1 to 13.

15. A sender device (100) configured for unidirectional transfer of data to a receiver device (200), comprising:

    - a data storage interface (120) to a data storage (122);
    - a display output (140) to a display (142);
    - a processor subsystem (160) configured to:

        - via the data storage interface (120), access the data to be transmitted to the receiver device (200);
        - encode respective parts of the data to generate respective 2D barcodes (10, 20, 30, 40, 50, 51, 90);
        - via the display output (140), sequentially display the 2D barcodes (10, 20, 30, 40, 50, 51, 90) on the display (142).

    wherein the processor subsystem (160) is further configured to:

        - select values of one or more information density parameters, wherein the one or more information density parameters determine a data transfer rate of the unidirectional transfer of the data to the receiver device (200), wherein the values of the one or more information density parameters are selected based on an estimate of a capability of the receiver device (200) to successfully capture and decode the 2D barcodes (10, 20, 30, 40, 50, 51, 90) generated using the one or more selected parameters; and

- use the selected parameters to generate and display the 2D barcodes (10, 20, 30, 40, 50, 51, 90).

*Fig. 1*

*Fig. 2*

30

40

50    60

60

70

80

*Fig. 3*

Fig. 4                                    41

Fig. 5                        90

Fig. 6

Fig. 7a          701

Fig. 7b          702

Fig. 7c

54

800

810

Fig. 8

**Europäisches Patentamt**
**European Patent Office**
**Office européen des brevets**

# EUROPEAN SEARCH REPORT

Application Number

EP 24 21 8365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/020393 A1 (HWANG JUNG-YEON [KR] ET AL) 24 January 2013 (2013-01-24) <br> * paragraph [0028] - paragraph [0049] * <br> * paragraph [0071] - paragraph [0082] * <br> * figures 1,6,7 * | 1-15 | INV. <br> G06K7/10 <br> G06K19/06 |
| Y,D | EP 4 300 353 A1 (LIGHTDROP B V [NL]) 3 January 2024 (2024-01-03) <br> * paragraph [0001] * <br> * paragraph [0036] * <br> * figure 1 * | 1,3-15 | |
| Y | US 2012/187184 A1 (CHALLA NAGESH [US] ET AL) 26 July 2012 (2012-07-26) <br> * paragraph [0052] * <br> * figure 10 * | 1,3-15 | |
| A | US 11 948 030 B1 (GRUNDHOEFER ANSELM [US] ET AL) 2 April 2024 (2024-04-02) <br> * column 24, line 53 - column 25, line 2 * <br> * figure 10 * | 1-15 | |
| A | US 2010/020970 A1 (LIU XU [US] ET AL) 28 January 2010 (2010-01-28) <br> * paragraph [0045] * <br> * paragraph [0091] * <br> * figure 2 * | 1-15 | TECHNICAL FIELDS SEARCHED (IPC) <br><br> G06K |
| A | US 2012/298752 A1 (KIM MOON J [US]) 29 November 2012 (2012-11-29) <br> * paragraph [0033] - paragraph [0034] * <br> * figures 3,4 * | 1-15 | |

The present search report has been drawn up for all claims

| Place of search | Date of completion of the search | Examiner |
|---|---|---|
| Munich | 4 July 2025 | Bhalodia, Anil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 756 669 A1

## ANNEX TO THE EUROPEAN SEARCH REPORT
## ON EUROPEAN PATENT APPLICATION NO.

EP 24 21 8365

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | | Publication date | Patent family member(s) | | Publication date |
|---|---|---|---|---|---|
| US 2013020393 | A1 | 24-01-2013 | KR 20130011791 A | | 30-01-2013 |
| | | | US 2013020393 A1 | | 24-01-2013 |
| EP 4300353 | A1 | 03-01-2024 | EP 4300353 A1 | | 03-01-2024 |
| | | | US 2023419063 A1 | | 28-12-2023 |
| US 2012187184 | A1 | 26-07-2012 | US 2012187184 A1 | | 26-07-2012 |
| | | | WO 2012012468 A1 | | 26-01-2012 |
| US 11948030 | B1 | 02-04-2024 | US 11610088 B1 | | 21-03-2023 |
| | | | US 11948030 B1 | | 02-04-2024 |
| US 2010020970 | A1 | 28-01-2010 | NONE | | |
| US 2012298752 | A1 | 29-11-2012 | US 8231054 B1 | | 31-07-2012 |
| | | | US 8418922 B1 | | 16-04-2013 |
| | | | US 2012298752 A1 | | 29-11-2012 |

EPO FORM P0459

For more details about this annex : see Official Journal of the European Patent Office, No. 12/82

REFERENCES CITED IN THE DESCRIPTION

**Patent documents cited in the description**

- EP 4300353 A